(19) Europäisches Patentamt
European Patent Office
Office européen des brevets

(11) **EP 2 996 183 A1**

(12) **EUROPEAN PATENT APPLICATION**
published in accordance with Art. 153(4) EPC

(43) Date of publication:
**16.03.2016 Bulletin 2016/11**

(51) Int Cl.:
*H01M 8/02* (2006.01)      *B32B 5/02* (2006.01)
*B32B 5/06* (2006.01)      *B32B 5/14* (2006.01)
*B32B 5/26* (2006.01)      *H01M 8/0234* (2016.01)
*H01M 8/0239* (2016.01)      *H01M 8/0243* (2016.01)
*H01M 8/0245* (2016.01)      *H01M 8/10* (2006.01)
*H01M 8/1018* (2016.01)

(21) Application number: 14794381.5

(22) Date of filing: 02.05.2014

(86) International application number:
**PCT/JP2014/062158**

(87) International publication number:
**WO 2014/181771 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.05.2013   JP 2013100109**
**12.11.2013   JP 2013233850**

(71) Applicant: **Mitsubishi Rayon Co., Ltd.**
**Tokyo 100-8253 (JP)**

(72) Inventor: **SUMIOKA Kazuhiro**
**Toyohashi-shi**
**Aichi 440-8601 (JP)**

(74) Representative: **Hoffmann Eitle**
**Patent- und Rechtsanwälte PartmbB**
**Arabellastraße 30**
**81925 München (DE)**

(54) **POROUS ELECTRODE SUBSTRATE, METHOD FOR MANUFACTURING SAME, AND SOLID POLYMER FUEL CELL**

(57)     The purpose of this invention is to provide a porous electrode substrate that has a low manufacturing cost, has sufficient conductivity and gas diffusion characteristics, and shows favorable power generation ability with minor structural changes in the porous electrode substrate. This invention is: a method for manufacturing a porous electrode substrate that comprises a step (1) in which a dispersion fluid comprising a carbon powder (C) and a fluorine-based resin is applied to one or both surfaces of a precursor sheet wherein carbon short cut fibers (A1) are dispersed in planar orientations with the fiber orientations being substantially within the same plane, and as a result the fluorine-based resin that contains the carbon powder (C) in the vicinity of the surface layer of one side or both sides of the precursor sheet is distributed unevenly to form a precursor sheet with unevenly-distributed fluorine-based resin.

**Description**

TECHNICAL FIELD

The present invention relates to a porous electrode substrate capable of being used for a fuel cell, a method of manufacturing the same, and a membrane-electrode assembly and a polymer electrolyte fuel cell including such a porous electrode substrate.

This application is based on and claims priority from Japanese Patent Application 2013-100109, filed on May 10, 2013 and Japanese Patent Application 2013-233850, filed on November 12, 2013, with the Japanese Intellectual Property Office, disclosures of which are incorporated herein in their entirety by reference.

BACKGROUND ART

A gas diffusion electrode substrate installed in a fuel cell was conventionally a porous electrode substrate including a paper-like carbon/carbon complex which is prepared by making a paper with a carbon short cut fiber, binding the carbon short cut fiber using a thermosetting resin, and then, burning the product thus obtained at a high temperature, thereby carbonizing an organic polymer, in order to increase a mechanical strength (see Patent Document 1).

In addition, with the purpose of low cost, proposed was a porous electrode substrate, which is prepared by making a paper with an oxidized short cut fiber, and then, burning the paper thus obtained at a high temperature, thereby carbonizing an oxidized short cut fiber. However, since the oxidized short cut fiber is shrunk at the time of burning, there were the problems regarding the dimensional stability and surface precision of an electrode substrate. Furthermore, with the purpose of further low cost, proposed was a porous electrode substrate, which was prepared by coating the slurry including a carbon powder and a fluorine-based resin on the sheet including a carbon short cut fiber and a binder, thereby omitting a carbonizing process. However, with such a porous electrode substrate, it was difficult to exhibit electrical conductivity while maintaining a sufficient porosity.

Patent Document 1 discloses a porous carbon electrode substrate for a fuel cell, in which the thickness is 0.05 to 0.5 mm and the bulk density is 0.3 to 0.8 g/cm$^3$, and the bending strength of 10 MPa or higher and the deflection in bending is 1.5 mm or more, for the three points bending test at the conditions of the strain rate of 10 mm/min, the distance between fulcrums of 2 cm, and the specimen width of 1 cm. Patent Document 2 discloses a carbon fiber sheet having the thickness of 0.15 to 1.0 mm, the bulk density of 0.15 to 0.45 g/cm$^3$, the content of carbon fiber of 95% by mass or more, the compression transformation rate of 10 to 35%, the electrical resistance value of 6 m$\Omega$ or less, and the degree of drape of 5 to 70 g. Patent Document 3 discloses a gas diffusion layer for a fuel cell, including a mat constituted of including a plurality of carbon fibers; and a plurality of acrylic pulp fibers incorporated into the carbon fiber mat, in which the acrylic pulp fibers are cured and carbonized after incorporation into the carbon fiber mat.

Patent Document 4 discloses a gas diffusion substrate including the nonwoven fabric network structure of a carbon fiber, in which the carbon fiber is graphitized but the nonwoven fabric network structure is not subjected to a graphitization process, and the mixture of graphite particles and a hydrophobic polymer disposed within the nonwoven fabric network structure, in which the longest dimensions of at least 90% of the graphite particles are less than 100 $\mu$m. Patent Document 5 discloses a diffusion layer for a fuel cell, which diffuses a reactive fluid being used for the powder generation reaction of a fuel cell, and has a conductive fiber assembly having a first conductive fiber and a second conductive fiber as a substrate, in which the first conductive fiber has higher linearity than that of the second conductive fiber and the second conductive fiber has high curl characteristics as compared with the first conductive fiber.

However, although the porous carbon electrode substrate disclosed in Patent Document 1 has high mechanical strength and surface smoothness, and sufficient gas permeability and electrical conductivity, there is a problem in that the production cost increases. The method for producing a carbon fiber sheet disclosed in Patent Document 2 can achieve lower cost, but problems of the method are that shrinkage during the burning is large, and therefore, the thickness unevenness of the obtained porous electrode substrate is large, and the undulation of the sheet is large. The porous electrode substrate disclosed in Patent Document 3 can achieve lower cost, but a problem of the porous electrode substrate is that there is a little tangling of the carbon fibers with the acrylic pulp in sheeting, and therefore, handling is difficult. In addition, the acrylic pulp has little polymer molecular direction compared with fibrous materials, and therefore, the carbonization rate during carbonization is low, and it is necessary to add much acrylic pulp in order to increase the handling properties. The porous electrode substrates disclosed in Patent Documents 4 and 5 are formed of carbon short cut fibers, a carbon powder, and a fluorine-based resin, and the carbonization step of burning at a high temperature can be omitted, and therefore, lower cost can be achieved. However, a problem of the porous electrode substrate is that it is necessary to increase the amount of the carbon powder and the fluorine-based resin in order to increase electrical conductivity in the thickness direction, and therefore, it is difficult to achieve both electrical conductivity and gas diffusivity.

In addition, a porous electrode substrate is very unlikely to be used as it is in a fuel cell. In general, the porous electrode substrate is subjected to a water repellency processing using a fluoride resin or a densification processing of a surface including carbon particles (MPL: Micro Porous Layer), and then, is loaded on a cell. In other words, in terms of the whole fuel cell, it is important to reduce the contact resistance with neighboring members rather than the specific resistance of the porous electrode substrate. However, until now, there has not been proposed a porous electrode substrate from this point of view.

In addition, by largely changing the structure between the layers, that is, the MPL and the porous electrode substrate, electrical conductivity and gas diffusivity are inhibited in the interface between these two layers, and also, the drainage characteristics of the generation water is inhibited at the time of power generation, thereby, largely inhibiting the powder generation ability.

CITATION LIST

PATENT DOCUMENT

Patent Document 1: WO 2002/042534 A
Patent Document 2: WO 2001/056103 A
Patent Document 3: JP 2007-273466 A
Patent Document 4: JP 2008-503043 W
Patent Document 5: JP 2009-87614 A

SUMMARY OF THE INVENTION

PROBLEM TO BE SOLVED BY THE INVENTION

The invention was performed in view of the above-described points, and an object of the invention is to provide a porous electrode substrate, which has a low manufacturing cost, has sufficient electrical conductivity and gas diffusivity, and exhibits good power generation ability with minor structural changes in the porous electrode substrate, and a method for manufacturing the same. In addition, another object of the invention is to provide a membrane-electrode assembly and a polymer electrolyte fuel cell including such a porous electrode substrate.

MEANS FOR SOLVING PROBLEM

The present inventors have found that the above-described objects can be solved by the following embodiments of the invention.

<1> A method for manufacturing a porous electrode substrate, the method comprising:

(1) a process of preparing a precursor sheet with unevenly-distributed fluorine-based resin by applying a dispersion solution including a carbon powder (C) and a fluorine-based resin on the surface of one side or both sides of a precursor sheet, in which carbon short cut fibers (A1) are dispersed in a planar direction with the fiber directions of the respective fibers being substantially on the same plane, and thus, by unevenly distributing the fluorine-based resin including the carbon powder (C) in the vicinity of the surface layer of one side or both sides of the precursor sheet; and
(2) a process of heat-treating the precursor sheet with unevenly-distributed fluorine-based resin at a temperature of 150°C or higher and lower than 400°C after the process (1).

<2> The method for manufacturing a porous electrode substrate disclosed in <1>, in which the dispersion solution including the carbon powder (C) and the fluorine-based resin has the solid concentration of 2% or more and 20% or less.
<3> The method for manufacturing a porous electrode substrate disclosed in <1> or <2>, in which a viscosity of the dispersion solution including the carbon powder (C) and the fluorine-based resin is 1000 cP or more and 10000 cP or less.
<4> The method for manufacturing a porous electrode substrate disclosed in any one of <1> to <3>, in which a cake layer including the carbon powder (C) and the fluorine-based resin is formed in the vicinity of the surface layer of one side by impregnating the carbon powder (C) and the fluorine-based resin in substantially entire surface of the surface of the precursor sheet by applying the dispersion solution including the carbon powder (C) and the fluorine-based resin on the surface of one side of the precursor sheet to unevenly distribute the carbon powder (C) and the fluorine-based resin in the vicinity of the surface layer of one side, in the process (2).

<5> The method for manufacturing a porous electrode substrate disclosed in any one of <1> to <4>, the method further comprising (3) a process of preparing a precursor sheet X-1 by distributing the carbon short cut fiber (A1) and an oxidized fiber precursor fiber (b1) with the fiber directions of the respective fibers being distributed in the planar direction, before the process (1).

<6> The method for manufacturing a porous electrode substrate disclosed in <5>, the method further comprising (4) a process of preparing a precursor sheet X-3 by laminating and integrating a precursor sheet X-2 prepared by distributing a carbon short cut fiber (A2) and an oxidized fiber precursor fiber (b2) on the precursor sheet X-1 between the process (3) and the process (1).

<7> The method for manufacturing a porous electrode substrate disclosed in <5>, the method further comprising (5) a process of forming a three-dimensional entangled structure in the precursor sheet X-1 by performing an entanglement treatment to the precursor sheet X-1 between the process (3) and the process (1).

<8> The method for manufacturing a porous electrode substrate disclosed in <6>, the method comprising (5) a process of forming a three-dimensional entangled structure by performing an entanglement treatment of the precursor sheet X-3 between the process (4) and the process (1).

<9> The method for manufacturing a porous electrode substrate disclosed in any one of <1> to <7>, the method further comprising (6) a process of heat-pressing molding the precursor sheet at a temperature of lower than 200°C, before the process (1).

<10> The method for manufacturing a porous electrode substrate disclosed in any one of <1> to <9>, in which the carbon powder (C) and the fluorine-based resin are applied several times in the process (1).

<11> A porous electrode substrate being manufactured by the method for manufacturing a porous electrode substrate disclosed in any one of <1> to <10>.

<12> A porous electrode substrate having a structure with carbon short cut fibers joined by a fluorine-based resin including a carbon powder (C), in which the fluorine-based resin including the carbon powder (C) is unevenly distributed in the vicinity of the surface layer of one side or both sides of the porous electrode substrate in the structure.

<13> A porous electrode substrate having a structure with carbon short cut fibers being joined by an oxidized fiber, and also, the carbon short cut fibers and the oxidized fiber being joined by a fluorine-based resin including a carbon powder (C), in which the fluorine-based resin including the carbon powder (C) is unevenly distributed in the vicinity of the surface layer of one side or both sides of the porous electrode substrate in the structure.

<14> A porous electrode substrate comprising a layer A that only substantially includes a fluorine-based resin including a carbon powder (C), and a layer B with carbon short cut fibers being substantially joined by the fluorine-based resin including the carbon powder (C), in which the layer A is formed on one side or both sides of the layer B, an occupation rate, represented by the following Equation (I), of the fluorine-based resin including the carbon powder (C) in the layer B is 20% to 80%, and a change in an occupation rate, represented by the following Equation (II), of the fluorine-based resin including the carbon powder (C) in a thickness direction of the layer B is $\pm$3% or more and $\pm$15% or less:

$$\text{Occupation rate of fluorine-based resin including carbon powder (C) in layer B:}$$

$$\text{volume of fluorine-based resin including carbon powder (C) occupied in layer}$$
$$\text{B/(volume of layer B} - \text{volume of space occupied in layer B}) \dots \text{(I)}$$

$$\text{Change in occupation rate: (occupation rate of fluorine-based resin including}$$
$$\text{carbon powder (C) in layer B divided in thickness of 20 } \mu\text{m}) - \text{(occupation rate of}$$
$$\text{fluorine-based resin including carbon powder (C) in adjacent layer B divided in}$$
$$\text{thickness of 20 } \mu\text{m}) \dots \text{(II)}$$

<15> A polymer electrolyte fuel cell using the porous electrode substrate disclosed in any one of <11> to < 14>.

<16> A membrane-electrode assembly using the porous electrode substrate disclosed in any one of <11> to <14>.

<17> A polymer electrolyte fuel cell using the membrane-electrode assembly disclosed in <16>.

EFFECT OF THE INVENTION

According to the invention, it is possible to provide the porous electrode substrate, which has a low manufacturing cost, has sufficient electrical conductivity and gas diffusivity, and exhibits good power generation ability with minor structural changes in the porous electrode substrate, and a method for manufacturing the same. In addition, it is possible to provide a membrane-electrode assembly and a polymer electrolyte fuel cell, which include such a porous electrode substrate.

MODE(S) FOR CARRYING OUT THE INVENTION

<Porous electrode substrate>

In detail, the porous electrode substrate according to an embodiment of the invention may be the following [1] to [3]:

[1] A porous electrode substrate having a structure with carbon short cut fibers joined by a fluorine-based resin including a carbon powder (C), in which the fluorine-based resin including the carbon powder (C) is unevenly distributed in the vicinity of the surface layer of one side or both sides of the porous electrode substrate in the structure.
[2] A porous electrode substrate having a structure with carbon short cut fibers being joined by an oxidized fiber, and also, the carbon short cut fibers and the oxidized fiber being joined by a fluorine-based resin including a carbon powder (C), in which the fluorine-based resin including the carbon powder (C) is unevenly distributed in the vicinity of the surface layer of one side or both sides of the porous electrode substrate in the structure.
[3] A porous electrode substrate comprising a layer A that only substantially includes a fluorine-based resin including a carbon powder (C), and a layer B with carbon short cut fibers being substantially joined by the fluorine-based resin including the carbon powder (C), in which the layer A is formed on one side or both sides of the layer B, an occupation rate, represented by the following Equation (I), of the fluorine-based resin including the carbon powder (C) in the layer B is 20% to 80%, and a change in an occupation rate, represented by the following Equation (II), of the fluorine-based resin including the carbon powder (C) in a thickness direction of the layer B is ±3% or more and ±15% or less:

$$\text{Occupation rate of fluorine-based resin including carbon powder (C) in layer B:}$$

$$\text{volume of fluorine-based resin including carbon powder (C) occupied in layer}$$

$$\text{B/(volume of layer B} - \text{volume of space occupied in layer B)} \dots \text{(I)}$$

$$\text{Change in occupation rate: (occupation rate of fluorine-based resin including}$$

$$\text{carbon powder (C) in layer B divided in thickness of 20 } \mu\text{m)} - \text{(occupation rate of}$$

$$\text{fluorine-based resin including carbon powder (C) in adjacent layer B divided in}$$

$$\text{thickness of 20 } \mu\text{m)} \dots \text{(II)}$$

In this structure body, there is formed a partial structure, in which a carbon powder (C) and a fluorine-based resin are unevenly distributed in the vicinity of the surface layer of one side of a porous electrode substrate.
In the present embodiment, the sentence, "the carbon powder (C) and a fluorine-based resin being unevenly distributed in the vicinity of the surface layer of one side of a porous electrode substrate" means that there are present many carbon powders (C) and fluorine-based resins on the surface, or the surface and the vicinity of the surface of one side of the porous electrode substrate as compared with the inside (inner layer) of the porous electrode substrate. In detail, it indicates the state in that (i) when the cross section of the porous electrode substrate is observed, the occupation rate of the pores in the vicinity of the surface is relatively low and it is difficult to distinguish the fibers one by one, but the occupation rate of the pores in the inner layer that is apart from the surface is relatively high, and it is easy to distinguish the fibers one by one. In addition, when being viewed from the surface of the porous electrode substrate, (ii) the surface of the porous electrode substrate is almost covered by the carbon powder (C) and the fluorine-based resin, and thus, when the surface thereof is observed, the state where fibers or pores other than the outmost layer are almost not seen is preferred. In more detail, the state of being unevenly distributed is defined by the occupation rate of pores that are determined in the photograph observing the following cross section of the porous electrode substrate.

The above (i), "the state, in which the occupation rate of the pores in the vicinity of the surface is relatively low and it is difficult to distinguish the fibers one by one, but the occupation rate of the pores in the inner layer is relatively high, and it is easy to distinguish the fibers one by one," may be determined in the photograph observing the cross section of the porous electrode substrate. When the area to 30 $\mu$m in depth from the outmost layer of the porous electrode substrate is defined as X and also the area to 50 $\mu$m in the thickness method of the center of the porous electrode substrate is defined as Y, the occupation rate of pores in the area X is preferably less than 30%, and also, the occupation rate of pores in the area Y is preferably 30 to 90%, and more preferably 50 to 80%. In addition, the above "occupation rate of pores" is the value according to the calculation method to be described below.

When the cross section or the surface of the porous electrode substrate is observed, it is performed as follows. In order to make the cross section of the porous electrode substrate, since in the case of using a general mechanical polishing, polishing mark or the sagging of material joining interface easily occurs, it is preferred to use a cross-section polisher (CP) or a focusing ion beam device (FIB), based on an ion etching method. A method for observing the cross-section or the surface of a porous electrode substrate is not particularly limited as long as it can easily distinguish fibers or particles. However, it is preferred to use a scanning electron microscope with the deep depth of field. As a sectional observation magnification, it is preferred to use the magnification capable of at least covering the whole object in a thickness direction (one photograph contains the area from one surface layer to other surface layer) and distinguishing fibers or pores. In detail, it is about 200 times to 500 times. In addition, in order to calculate the porosity in the observation photograph, it is preferred to use image analysis software capable of calculating the area calculations for each part by dividing a pore part and other parts through the binarization of the gray scale image.

The above (ii), "the state where fibers or pores other than the outmost layer are almost not seen" indicates that the occupation area of a carbon powder (C) and a fluorine-based resin is larger than the occupation area of fibers or pores other than the outmost layer in the photograph of observing the surface of a porous electrode substrate. At this time, the fibers or pores other than the outmost layer may be partially seen. In the case of digitizing the above state, in the photograph of observing the surface, the occupation area of a carbon powder (C) and a fluorine-based resin for the whole area is preferably 50% or more, more preferably 70% or more, and particularly preferably 90% or more.

The carbon short cut fibers (A) may be joined or may not be joined in the precursor sheet by the resin carbide to be described below.

In addition, the carbon short cut fibers (A) are not joined even when performing a heat treatment, but in the process (2) to be described below, when the precursor sheet is heat-treated at the temperature of 150°C or higher and lower than 400°C, the fluorine-based resin in the precursor sheet acts as a binding agent when heat-treating at the temperature of 150°C or higher and lower than 400°C to form the structure (partial structure), in which the carbon short cut fibers (A) are joined by the carbon powder (C) and fluorine-based resin.

In addition, in the process (3) or (4) to be described below, in the case of using an oxidized fiber precursor fiber (b), in the process (2), the oxidized fiber precursor fiber (b) in the precursor sheet is partially dissolved, and then, the dissolved oxidized fiber precursor fiber acts as an adhesion ingredient, thereby forming the partial structure, in which the carbon short cut fibers (A) are joined via an oxidized fiber (B). In this state, the carbon short cut fibers (A) are bonded by the oxidized fiber (B). Here, the bonding indicates the state that the fibers are adjacent and adheres such that respective fibers hardly moves and the structure body made of fibers keeps the shape thereof in some degree.

In addition, the carbon short cut fiber (A) and oxidized fiber (B) are joined by their fusion of the oxidized fiber precursor fiber (b) in the process (1) to be described below, but furthermore, generally, are also joined by a carbon powder (C) and a fluorine-based resin. The joined part of the carbon short cut fiber (A) and the oxidized fiber (B) is also joined by "the carbon powder (C) and fluorine-based resin". Therefore, the resistance of the part becomes low, thereby further increasing the strength.

In addition, when using the oxidized fiber precursor fiber (b) in the process (3) or (4), in the case where "the carbon powder (C) and fluorine-based resin" are intervened "between the carbon short cut fiber (A) and the oxidized fiber precursor fiber (b)" in the process (1) is the case of forming "the partial structure of the carbon short cut fiber (A) and the oxidized fiber (B) being joined by the carbon powder (C) and the fluorine-based resin".

In addition, when joining the oxidized fiber precursor fibers (b) in the precursor sheet, in the process (2), the partial structure of joined "oxidized fibers (B)" is formed. There is the case where the joined parts are further joined by "the carbon powder (C) and the fluorine-based resin".

In addition, in the process (1), when intervening "the carbon powder (C) and the fluorine-based resin" between the oxidized fiber precursor fibers (b), the partial structure formed by joining "the oxidized fibers (B)" by "the carbon powder (C) and the fluorine-based resin" is formed.

The shape of a porous electrode substrate may be selected from the shapes that are known in a fuel cell field, if necessary, and for example, the shapes, such as, a sheet shape or a spiral shape, may be taken.

The basis weight of the porous electrode substrate in a sheet shape is preferably 15 g/m$^2$ or more and 100

g/m$^2$ or less from the viewpoint of gas permeability and handling property. In addition, the porosity that can be measured by observing the above-described cross-section of the porous electrode substrate in a sheet shape is preferably 50% or more and 90% or less from the viewpoint of gas permeability and electrical conductivity. Furthermore, the thickness of the porous electrode substrate in a sheet shape is preferably 50 $\mu$m or more and 300 $\mu$m or less from the viewpoint of gas permeability, electrical conductivity, and handling property. In addition, the undulation of the porous electrode substrate in a sheet shape is preferably less than 5 mm.

In addition, the gas permeability of the porous electrode substrate is preferably 10 ml/hr/cm$^2$/mmAq or more and 3000 ml/hr/cm$^2$/mmAq or less, rather than exhibiting the power generation ability that is equivalent to MPL, from the viewpoint of exhibiting gas diffusivity within a fuel cell, by unevenly distributed carbon powder (C) and fluorine-based resin in the vicinity of surface layer of one side of the porous electrode substrate.

In addition, the electrical resistance in the thickness direction (through-plane electrical resistance) of the porous electrode substrate is preferably 50 m$\Omega$·cm$^2$ or less from the viewpoint of the reduction in electrical resistance loss within a fuel cell. In addition, the electrical resistance in the unit thickness direction (through-plane specific resistance) is preferably 150 m$\Omega$/cm$^2$/mm or less. In addition, methods for measuring the gas permeability and through-plane electrical resistance of the porous electrode substrate will be described later.

<Three-Dimensional Entangled Structure Body>

In the present embodiment, the porous electrode substrate forms the three-dimensional entangled structure. The forming of three-dimensional entangled structure (three-dimensional entangled structure body) means the structure in which the oxidized fibers (B) and the carbon short cut fibers (A) constituting the structure body are tangled with one another, and thus, the carbon short cut fibers and the oxidized fibers (B) are also orientated in the thickness direction of the porous electrode substrate. In more detail, the forming of three-dimensional entangled structure is the state in which when observing the cross section of the porous electrode substrate with the magnification of 200 to 500 times (for example, 300 times) from the photograph of observing the cross section as described above, the observable fibers are crossed to each other, and the average of angles with the horizontal planes of the carbon short cut fibers measured is 3° or more, or the maximum value of angles of the oxidized fibers (B) with the horizontal planes (sheet planes) measured is 10° or more. In addition, when determining the average value and maximum value of angles, the measured point may be 50 points, for example. The crossing each other means that, for example, they are crossed in the state of making the angle of 10° or more by an acute angle among the angles in a fiber direction each other. The three-dimensional entangled structure may be molded by entangling the carbon short cut fibers and oxidized fiber precursor fibers constituting the structure body by the entanglement treatment to be described below.

The porous electrode substrate of the present embodiment may be used as a porous electrode substrate for a polymer electrolyte fuel cell that is used for a polymer electrolyte fuel cell. In addition, from the viewpoint of handling property and electrical conductivity, the carbon short cut fibers in the porous electrode substrate are joined by the oxidized fibers (B), and the carbon short cut fibers are joined by the carbon powder (C) and fluorine-based resin, and thereby, it is preferred to have the structure in which the joined parts of the carbon short cut fibers and oxidized fibers (B) are also joined by the "carbon powder (C) and fluorine-based resin". Furthermore, the porous electrode substrate having the structure, in which the carbon short cut fibers and the oxidized fibers (B) are entangled each other even in a thickness direction, is more preferred.

<Carbon short cut fibers (A)>

The carbon short cut fibers that are used for the porous electrode substrate of the present embodiment are the short cut fibers prepared by cutting the carbon fiber in a specific length within the range of 1 mm to 20 cm. As the materials constituting these carbon short cut fibers, there may be carbon fibers, such as, polyacrylonitrile-based carbon fibers (hereinafter referred to as "PAN-based carbon fibers"), pitch-based carbon fibers, and rayon-based carbon fibers, and the carbon short cut fibers may be those prepared by cutting the carbon fibers to be a suitable length. From the viewpoint of the mechanical strength of the porous electrode substrate, PAN-based carbon fibers are preferred as the materials constituting the carbon short cut fibers. The carbon short cut fibers (A) (for example, the carbon short cut fibers (A1) and carbon short cut fibers (A2) to be described below, and the same applies to the following descriptions) may use one type of carbon short cut fiber or may use in combination of a plurality of different types of carbon short cut fibers.

The average fiber length of carbon short cut fibers (A) is preferably about 2 to 12 mm from the viewpoint of dispersibility. The average fiber diameter of carbon short cut fibers is preferably 3 to 9 $\mu$m from the viewpoint of production costs and dispersibility of carbon short cut fibers, and is more preferably 4 to 8 $\mu$m from the viewpoint of the smoothness of the porous electrode substrate. The average fiber length and the average fiber diameter of carbon short cut fibers (A) may be measured by using one type of carbon short cut fiber or may use in combination of a plurality of different types of carbon short cut fibers.

The content of carbon short cut fibers in the porous electrode substrate is preferably 40 to 90% by mass with respect to the total mass of the sum of the carbon short cut fibers and the oxidized fibers (B). In order to maintain sufficient mechanical strength of the porous electrode substrate and further provide sufficient through-plane electrical resistance, the content of carbon short cut fibers is more preferably 50 to 90% by mass with respect to the sum of the carbon short cut fibers and the oxidized fibers (B).

<Oxidized fibers (B)>

The oxidized fibers (B) that are included in the porous electrode substrate of the present embodiment are fibers that join carbon short cut fibers (A) together. The oxidized fibers (B) are present in a bent or curved state at the portions joining the carbon short cut fibers (A), and may form a fiber structure, individually, or may form a three-dimensional mesh-like structure. The oxidized fibers (B) preferably form a mesh-like structure that is formed by entangling each other in a thickness direction, from the viewpoint of handling property and electrical conductivity.

The content of oxidized fibers (B) in the porous electrode substrate is preferably 10 to 60% by mass with respect to the total mass of the sum of the carbon short cut fibers and oxidized fibers (B). In order to maintain sufficient mechanical strength of the porous electrode substrate and further provide sufficient through-plane electrical resistance, the content of oxidized fibers (B) is more preferably 10 to 50% by mass with respect to the total mass of the sum of the carbon short cut fibers and the oxidized fibers (B).

As described in the manufacturing method to be described below, the oxidized fibers (B) may be obtained by oxidizing the oxidized fiber precursor fibers (b) through a heat-treatment. Therefore, the oxidized fibers (B) are the oxidized fiber derived from the oxidized fiber precursor fiber (b), and for example, are the oxidized fiber prepared by oxidizing a polymer as described below.

From the viewpoint of electrical conductivity and productivity, the oxidized fibers (B) preferably include conductive particles to be described below. These conductive particles are the conductive particles derived from those that are included in the oxidized fiber precursor fibers (b). The content of conductive particles in the oxidized fiber (B) is preferably 10% by mass or more with respect to the total mass of the oxidized fibers (B) from the viewpoint of electrical conductivity and preferably 90% by mass or less from the viewpoint of productivity.

In addition, the oxidized fiber precursor fibers (b) will be described below. In addition, the conductive particles and carbon powder (C) that can be used in the present embodiment will be also described below.

The oxidized fibers (B) are the fibers prepared by oxidizing the oxidized fiber precursor fibers (b) to be described below, and are constituted of the polymer prepared by oxidizing the polymer capable of being used for the oxidized fiber precursor fibers (b). Such a polymer may be the polymers prepared by oxidizing an acrylic polymer, a cellulosic polymer, and a phenolic polymer, as described below.

<Oxidized fiber precursor fiber (b)>

As the oxidized fiber precursor fiber (b), one or both of an oxidized fiber precursor short cut fiber (b-1) and a fibril-formed oxidized fiber precursor fiber (b-2) may be used.

The oxidized fiber precursor fibers (b) may only use the same oxidized fiber precursor fibers, or the combination of the plurality types of the oxidized fiber precursor fibers having different freeness, fiber diameters, fiber lengths, or polymer types may be used. In addition, the oxidized fiber precursor short cut fibers and fibril-formed oxidized fiber precursor fibers may be mixed, and then used. From the viewpoint of maintaining sufficient gas permeability of the porous electrode substrate, as the oxidized fiber precursor fiber (b), only the oxidized fiber precursor short cut fiber (b-1) may be preferably used. In addition, from the viewpoint of the handling property of the precursor sheet, as the oxidized fiber precursor fiber (b), the fibril-formed oxidized fiber precursor fiber (b-2) may be preferably used.

As the polymer that is used for the oxidized fiber precursor fiber (b), the polymer is preferred, as long as the residual mass of the polymer in the heat-treatment process is 60% by mass or more with respect to the total mass of the polymer before heat-treatment, from the viewpoint of maintaining sufficient mechanical strength of the precursor electrode substrate and also having low environmental load. In addition, the polymer having the residual mass of 80% by mass or more in the heat-treatment process is preferred.

As such a polymer, there may be an acrylonitrile-based polymer, a cellulosic polymer, and a phenolic polymer. These polymers may be used singly or in combination of a plurality of polymer types. In the case of using the mixture thereof, for one type or more of polymers, when the residual mass in the heat-treatment process is 60% by mass or more with respect to the total mass of the polymers before the heat-treatment, the polymers to be mixed may have the residual mass of 60% by mass or less in the heat-treatment process. These polymers are not particularly limited, but there may be used a methacrylic acid-based polymer, an acrylic acid-based polymer, a vinyl-based polymer, a cellulosic polymer, or a styrene-based polymer. It is preferred to use an acrylonitrile-based polymer, from the viewpoint of large residual amount in the heat-treatment process because the polymer has the residual mass of 60% by mass or more in the heat-treatment process, has spinnability, and can join carbon short cut fibers together from a low temperature to a high temperature, and the easiness of entanglement in the time of being mixed with carbon short cut fibers, and the strong strength of sheet.

The acrylonitrile-based polymer may be an acrylonitrile-based polymer (homopolymer) prepared by polymerizing acrylonitrile alone or may be an acrylonitrile polymer (copolymer) prepared by copolymerizing acrylonitrile and other monomers. However, from the viewpoint of spinnability and mechanical strength of a porous electrode substrate after heat-treatment, the acrylonitrile-based polymer may include preferably an acrylonitrile unit of 50% by mass or more with respect to the total mass of the copolymer, and more preferably an acrylonitrile unit of 80% by mass or more. A monomer that is copolymerized with acrylonitrile is not particularly limited as long as it is an unsaturated monomer constituting a general acrylic fiber. However, examples thereof may be acrylic esters represented by methyl acrylate, ethyl acrylate, isopropyl acrylate, n-butyl acrylate, 2-ethyl hexyl acrylate, 2-hydroxyethyl acrylate, hydroxypropyl acrylate, or the like; methacrylic esters represented by methyl methacrylate, ethyl methacrylate, isopropyl methacrylate, n-butyl methacrylate, isobutyl methacrylate, t-butyl methacrylate, n-hexyl methacrylate, cyclohexyl methacrylate, lauryl methacrylate, methacrylic acid 2-hydroxyethyl, hydroxypropyl methacrylate, diethylaminoethyl methacrylate, or the like; acrylic acid, methacrylic acid, maleic acid, itaconic acid, acrylamide, N-methylol acrylamide, diacetoneacrylamide, styrene, vinyl toluene, vinyl acetate, vinyl chloride, vinylidene chloride, vinylidene bromide, vinyl fluoride, vinylidene fluoride, or the like. The acrylonitrile-based polymer preferably has the residual mass of 60% by mass or more in the heat-treatment process.

The weight average molecular weight of the acrylonitrile-based polymer is not particularly limited, but is preferably 50,000 to 1,000,000. When the weight average molecular weight of the acrylonitrile-based polymer is 50,000 or more, it is tended that the spinnability is improved, and also, the quality of thread of fiber becomes good. In addition, when the weight average molecular weight of the acrylonitrile-based polymer is 1,000,000 or less, it is tended that the polymer concentration that gives the optimum viscosity of a spinning dope solution becomes high, thereby improving productivity.

In addition, a method for preparing an oxidized fiber precursor fiber (b) is not particularly limited, and for example, the oxidized fiber precursor short cut fibers or fibril-formed oxidized fiber precursor fibers, which are prepared by the method to be described below, may be used as the oxidized fiber precursor fiber (b).

These oxidized fiber precursor fibers (b) have different ratios of the oxidized fibers (b) remained in the porous electrode substrate that is finally obtained, according to the types or mixed ratios thereof. The content of the oxidized fiber precursor fiber (b) in the precursor sheet is preferably 10% by mass or more and 90% by mass or less with respect to the total mass of the sum of the carbon short cut fibers and oxidized fiber precursor fibers. In order to maintain sufficient mechanical strength of a porous electrode substrate and also provide sufficient through-plane electrical resistance, the content of the oxidized fiber precursor fibers in the precursor sheet is more preferably 10% by mass or more and 60% by mass or less with respect to the total mass of the sum of the carbon short cut fibers and oxidized fiber precursor fibers in the precursor sheet.

<Oxidized fiber precursor short cut fiber>

The oxidized fiber precursor short cut fiber may be used as an oxidized fiber precursor fiber (b), and when it is used as the oxidized fiber precursor fiber (b), it is described as an oxidized fiber precursor short cut fiber (b-1). The oxidized fiber precursor short cut fiber is prepared by cutting the long fiber-formed oxidized fiber precursor fiber in a suitable length within the range of 1 mm to 20 cm. The fiber length of the oxidized fiber precursor short cut fiber is preferably about 2 to 20 mm from the viewpoint of dispesibility. The cross-sectional shape of the oxidized fiber precursor short cut fiber is not particularly limited, but from the viewpoint of mechanical strength after carbonization and production cost, the shape having high circularity (having the shape that is close to a perfect circle) is preferred. In addition, the diameter of the oxidized fiber precursor short cut fiber is more preferably 5 $\mu$m or less in order to suppress the breaking by the shrinkage caused by the heat-treatment at the temperature of 150°C or higher and lower than 400°C.

The polymer that is used as the oxidized fiber precursor short cut fiber has preferably the residual mass of 60% by mass or more in the heat-treatment process with respect to the total mass of the polymer before heat-treatment from the viewpoint of maintaining sufficient mechanical strength of the porous electrode substrate and also having low environmental load. In addition, the residual mass in the heat-treatment process is preferably 80% by mass or more.

These polymers may be an acrylonitrile-based polymer, a cellulosic polymer, and a phenolic polymer. These polymers may be used singly or in combination of a plurality of polymer types. In the case of using the mixture thereof, when the residual mass of one type or more of polymers in the heat-treatment process is 60% by mass or more, the residual mass of polymer to be mixed in the heat-treatment process may be 60% by mass or less. These polymers are not particularly limited, but a methacrylic acid-based polymer, an acrylic acid-based polymer, a vinyl-based polymer, a cellulosic polymer, or a styrene-based polymer may be used. It is preferred to use an acrylonitrile-based polymer, from the viewpoint of large residual amount in the heat-treatment process because the polymer has the residual mass of 60% by mass or more in the heat-treatment process, has spinnability, and can join carbon short cut fibers together from a low temperature to a high temperature, and the easiness of entanglement in the time of being mixed with carbon short cut fibers, and the strong strength of sheet. As this acrylonitrile-based polymer, the same things as the acrylonitrile-based polymer that is exemplified in the above <Oxidized fiber precursor fiber (b)> may be used.

When the oxidized fiber precursor short cut fibers are used as an oxidized fiber precursor fiber, the same oxidized fiber precursor fibers may be only used, or two or more types of oxidized fiber precursor short cut fibers having different fiber diameters and different types of polymers may be mixed and then used. The ratios of the remained oxidized fibers (B) in the porous electrode substrate that is finally obtained are different according the types of these oxidized fiber precursor short cut fibers or the fibril-formed oxidized fiber precursor fibers to be described below or the mixed ratio with the carbon short cut fibers. Therefore, based on the residual mass of the oxidized fiber precursor fibers used in the heat-treatment process, the mixed amount may be properly adjusted to be the desired content of the oxidized fibers (B).

<Fibril-formed oxidized fiber precursor fiber>

The fibril-formed oxidized fiber precursor fiber may be used as an oxidized fiber precursor fiber, and when using it as the oxidized fiber precursor fiber (b), it is described as a fibril-formed oxidized fiber precursor fiber (b-2). As the fibril-formed oxidized fiber precursor fibers, the oxidized fiber precursor fibers having the structure, in which a large number of fibrils having a diameter of several $\mu$m or less (for example, 0.1 to 3 $\mu$m) branch from a fibrous stem, and the oxidized fiber precursor short cut fibers to be fibrillated by beating may be used. By using these fibril-formed oxidized fiber precursor fibers, the carbon short cut fibers and fibril-formed oxidized fiber precursor fibers in the precursor sheet are closely entangled each other, and thereby, it is easy to obtain the precursor sheet with excellent mechanical strength. The freeness of the fibril-formed oxidized fiber precursor fiber is not particularly limited, but in general, when using the fibril-formed fiber with high freeness, the mechanical strength of the precursor sheet is improved, but the gas permeability of the porous electrode substrate is reduced.

As the fibril-formed oxidized fiber precursor fiber, the oxidized fiber precursor fiber having the structure, in which a large number of fibrils having different freeness, fiber diameters, or polymer types branch, may be used singly or in combination of two or more types. In addition, the oxidized fiber precursor short cut fibers having different freeness, fiber diameters, and polymer types to be fibrillated by beating may be used singly or in combination of two or more types. In addition, they may be combined and then used.

<Oxidized fiber precursor fibers having structure in which large number of fibrils branch>

The polymer that is used as the oxidized fiber precursor fiber having the structure, in which a large number of fibrils branch, has preferably the residual mass of 60% by mass or more in the heat-treatment process, from the viewpoint of maintaining sufficient mechanical strength of the porous electrode substrate and having low environmental load. In addition, the residual mass in the heat-treatment process is preferably 80% by mass or more.

As these polymers, an acrylonitrile-based polymer, a cellulosic polymer, or a phenolic polymer may be used. These polymers may be used singly, or in combination of a plurality of polymer types. When using the mixture thereof, in the case where one type or more of polymers in the heat-treatment process have the residual mass of 60% by mass or more, the polymer to be mixed in the heat-treatment process may have the residual mass of 60% by mass or less. These polymers are not particularly limited, but a methacrylic acid-based polymer, an acrylic acid-based polymer, a vinyl-based polymer, a cellulosic polymer, or a styrene-based polymer may be used. It is preferred to use an acrylonitrile-based polymer, from the viewpoint of large residual amount in the heat-treatment process because the polymer has the residual mass of 60% by mass or more in the heat-treatment process, has spinnability, and can join carbon short cut fibers together from a low temperature to a high temperature, and the easiness of entanglement in the time of being mixed with carbon short cut fibers, and the strong strength of sheet. As this acrylonitrile-based polymer, the same things as the acrylonitrile-based polymer that is exemplified in the above <Oxidized fiber precursor fiber (b)> may be used.

A method for preparing the oxidized fiber precursor fibers having the structure, in which a large number of fibrils branch, is not particularly limited, but it is preferred to use a jet solidification method that can easily control the freeness.

<Oxidized fiber precursor short cut fiber to be fibrillated by beating>

The oxidized fiber precursor short cut fibers to be fibrillated by beating is prepared by the fibrillation of the long fiber-formed readily splittable sea-island composite fibers that are cut in a proper length within the range of 1 mm to 20 cm through a beating operation using a beating means, such as, a refiner or a pulper. The oxidized fiber precursor short cut fibers to be fibrillated by beating are prepared using two or more types of different polymers that are dissolved in a common solvent and are incompatible. The residual mass of at least one type of the polymers in the heat-treatment process is preferably 60% by mass or more with respect to the total mass of the polymer before heat-treatment from the viewpoint of maintaining sufficient mechanical strength of a porous electrode substrate and also having low environmental load. In addition, the residual mass in the heat-treatment process is preferably 80% by mass or more.

As these polymers, there may be an acrylonitrile-based polymer, a cellulosic polymer, or a phenolic polymer. These polymers may be used singly or in combination of a plurality of polymer types. When using the mixture thereof, in the case where the residual mass of one or more types of polymers in the heat-treatment process is 60% by mass or more, the residual mass of the polymers to be mixed in the heat-treatment process may be 60% by mass or less. These polymers are not particularly limited, but a methacrylic acid-based polymer, an acrylic acid-based polymer, a vinyl-based polymer, a cellulosic polymer, or a styrene-based polymer may be used. It is preferred to use an acrylonitrile-based polymer, from the viewpoint of large residual amount in the heat-treatment process because the polymer has the residual mass of 60% by mass or more in the heat-treatment process, has spinnability, and can join carbon short cut fibers together from a low temperature to a high temperature, and the easiness of entanglement in the time of being mixed with carbon short cut fibers, and the strong strength of sheet. As this acrylonitrile-based polymer, the same things as the acrylonitrile-based polymer that is exemplified in the above <Oxidized fiber precursor fiber (b)> may be used.

When using the above-described acrylic polymers that has 6% by mass or more of the residual mass in the heat-treatment process among the polymers that are used for the readily splittable sea-island composite fibers with respect to the total mass of the polymer before the heat-treatment, the polymer other than the acrylonitrile-based polymers needs to be dissolved in a solvent common to the acrylonitrile-based polymer and to be stably present in a spinning dope solution. In other words, in the spinning dope solution, when the degree of incompatibility of two types of polymers is large, the fibers are heterogeneous, and also, yarn breakage during spinning is caused, and therefore, the forming of fibers may not be possible. Therefore, the other polymer needs miscibility such that it is incompatible with an acrylonitrile-based polymer when it is dissolved in a solvent common to the acrylonitrile-based polymer, but a see-island structure may be formed when spinning is carried out. In addition, in the case of wet spinning, when the other polymer is dissolved in water in a solidification tank or in a washing tank, falling off occurs, which causes problems during production, and therefore, the other polymer needs to be insoluble in water.

Examples of the other polymer that satisfies these requirements include polyvinyl chloride, polyvinylidene chloride, polyvinylidene fluoride, polyvinyl pyrrolidone, cellulose acetate, acrylic resins, methacrylic resins, and phenolic resins. However, cellulose acetate, acrylic resins, and methacrylic resins may be preferably used from the viewpoint of the balance of the above-described requirements. One or two or more polymers may be used as the other polymer.

The readily splittable sea-island composite fibers used as the oxidized fiber precursor short cut fibers to be fibrillated by beating may be prepared by a general wet spinning method. When an acrylonitrile-based polymer is used as the polymer in which the residual mass in a carbonization treatment process is 60% by mass or more, the acrylonitrile-based polymer is mixed with the other polymer, and then, the mixture is dissolved in a solvent to provide a spinning dope solution for the readily splittable sea-island composite fibers. Alternatively, the spinning dope solution obtained by dissolving an acrylonitrile-based polymer in a solvent, and the spinning dope solution obtained by dissolving the other polymer in a solvent may be mixed by a static mixer or the like to provide the spinning dope solution for the readily splittable sea-island composite fibers. An organic solvent, such as dimethylamide, dimethylformamide, or dimethyl sulfoxide, may be used as the solvent. The readily splittable sea-island composite fibers may be obtained by spinning these spinning dope solutions from nozzles, and subjecting the yarns to wet hot drawing, washing, drying, and dry hot drawing.

The cross-sectional shape of the oxidized fiber precursor short cut fibers to be fibrillated by beating is not particularly limited. In order to suppress dispersibility, and breakage due to shrinkage during heat treatment, the fineness of the oxidized fiber precursor short cut fibers to be fibrillated by beating is preferably 1 to 10 dtex.

The average fiber length of the oxidized fiber precursor short cut fibers to be fibrillated by beating is preferably 1 to 20 mm from the viewpoint of dispersibility.

The oxidized fiber precursor short cut fibers to be fibrillated by beating are beaten by mechanical external force due to the debonding of phase separation interfaces, and at least portions of them are split and fibrillated. The beating method is not particularly limited. Examples of the beating method include a method of fibrillating the oxidized fiber precursor short cut fibers by a refiner, a pulper, a beater, or the jet of a pressurized water flow (water jet punching).

The state of fibrillation changes depending on the beating method and the duration of beating when the oxidized fiber precursor short cut fibers to be fibrillated by beating are beaten by mechanical external force due to the debonding of phase separation interfaces. As a method for evaluating the degree of fibrillation, freeness evaluation (ISO-5636-5) may be used. The freeness of the oxidized fiber precursor short cut fibers to be fibrillated by beating is not particularly limited. As the freeness decreases, there is a tendency for the oxidized fibers (B) to form three-dimensional mesh-like structures. When the oxidized fiber precursor short cut fibers that still have high freeness and that are to be fibrillated by beating are used without performing sufficient beating, there is a tendency for the oxidized fibers (B) to form fiber structures.

<Resin carbide>

The resin carbide is carbide that joins between the carbon short cut fibers (A), and may use a carbon material obtained by the carbonization of a resin through heating. As a resin, the known resins capable of joining between the carbon short cut fibers (A) in the carbonization step may be properly selected and then used. From the viewpoint of easily remaining a conductive material after the carbonization, a phenol resin, an epoxy resin, a furan resin, or pitch is preferred as a resin and a phenol resin having high carbonization rate during the carbonization by heating is particularly preferred. As the phenol resin, the resol type phenolic resin obtained by the reaction of phenols and aldehydes in the presence of an alkali catalyst may be used. In addition, a novolac type phenol resin that is prepared by the reaction of phenols and aldehydes in the presence of an acidic catalyst according to the known method and exhibits thermal adhesiveness of a solid may be dissolved and then mixed with the resol type fluid phenol resin. However, in this case, the self-cross-linked typed one including a hardening agent, for example, hexamethylenediamine is preferred. As a phenol resin, the phenol resin solution dissolved in a solvent, such as, alcohol or ketones or the phenol resin dispersion solution dispersed in a dispersion medium, such as, water, may be used.

The content of the resin carbide in a precursor sheet is preferably 10 to 90% by mass with respect to the total mass of the precursor sheet. In order to maintain sufficient electrical conductivity or mechanical strength of a porous electrode substrate, the content of the resin carbide is more preferably 15 to 80% by mass.

<Carbon powder (C)>

The carbon powder (C) that is applied along with a fluorine-based resin on a precursor sheet to be unevenly distributed in the vicinity of the outer layer of one side of the precursor sheet is not particularly limited, but carbon black, graphite powder, a carbon fiber milled fiber, active carbon, or nanocarbon may be used. Carbon black or a mixture of carbon black and graphite powder is preferably used in order to exhibit electrical conductivity, reduce cost, and maintain the sheet shape.

Carbon black is generally present as a structure body (agglomerates) in which primary particles having an average particle diameter of several tens of nanometers are joined together by fusing to form structures, and further, the structures are joined together by van der Waals force. Carbon black has a significantly larger number of particles per unit mass than graphite powder, and at a certain critical concentration or more, the agglomerates are connected like a three-dimensional network to form macroscopic conductive paths. Therefore, the carbon powder (C) preferably contains at least carbon black. The proportion of carbon black included in carbon powder is more preferably in the range of 70 to 100% by mass, particularly preferably in the range of 80 to 100% by mass, with respect to the total mass of carbon powder. When the proportion of carbon black is 70% by mass or more, three-dimensional network-like conductive paths are easily formed in the porous electrode substrate and in the vicinity of one side of the porous electrode substrate.

On the other hand, the viscosity of a dispersion solution containing only carbon black as the carbon powder tends to increase, and therefore, it is preferred to add graphite powder in order to decrease the viscosity of the dispersion, while maintaining the concentration of carbon powder. Graphite powder is composed of a highly crystalline graphite structure, and the average particle diameter of its primary particles is generally several micrometers to several hundred micrometers. When mixing graphite powder, the proportion of graphite powder included in carbon powder is preferably in the range of 10 to 20% by mass.

In graphite powder, generally, the average particle diameters of the primary particles of the highly crystalline graphite structure is several micrometers to several hundred micrometers.

Since graphite powder is made of a highly crystalline graphite structure, it exhibits high electrical conductivity. The average particle diameter of the primary particle of graphite powder is generally several micrometers to several hundred micrometers. When the addition solution prepared by mixing carbon black and graphite powder with a fluorine-based resin to be described below is added to the precursor sheet to be described below, a portion of the fluorine-based resin and carbon black goes through the thickness direction of a sheet-formed object, and then, is penetrated to the back side thereof. However, graphite powder is hardly ever penetrated in the thickness direction due to its size, and thus, it is easy to be unevenly distributed on the surface thereof. As graphite powder, pyrolytic graphite, spheroidal graphite, scale-like graphite, lump graphite, earthy graphite, artificial graphite, or expanded graphite may be used. However, from the viewpoint of exhibiting electrical conductivity, pyrolytic graphite, spheroidal graphite, or scale-like graphite is preferred. The proportion of graphite powder included in carbon powder is preferably in the range of 10 to 20% by mass with respect to the total mass of carbon powder.

Furnace black, channel black, acetylene black, lamp black, thermal black, ketjen black, or the like may be used as the carbon black. Acetylene black or ketjen black having excellent electrical conductivity is more preferred, and ketjen black is particularly preferred from the viewpoint of electrical conductivity. Pyrolytic graphite, spheroidal graphite, scale-like graphite, lump graphite, earthy graphite, artificial graphite, or expanded graphite may be used as the graphite powder. Pyrolytic graphite or spheroidal graphite having excellent electrical conductivity is preferred.

The content of carbon powder (C) in the porous electrode substrate is preferably 10 to 100 parts by mass, more preferably 10 to 60 parts by mass, with respect to the total mass of the porous electrical substrate, when the sum of carbon short cut fibers and oxidized fibers (B) is 100 parts by mass, from the viewpoint of exhibiting electrical conductivity, and securing the strength and gas permeability of the porous electrode substrate.

As a milled fiber, the fiber prepared by grinding a virgin carbon fiber may be used, or the fiber prepared by a carbon fiber-reinforced thermosetting resin molding product, a carbon fiber-reinforced thermoplastic resin molding product, and a recycling product, or prepregs may be used.

<Fluorine-based resin>

A fluorine-based resin is not particularly limited, but homopolymers or copolymers of fluorine-based monomers, such as tetrafluoroethylene, hexafluoropropylene, vinylidene fluoride, trifluoroethylene chloride, vinyl fluoride, perfluoropropylvinyl ether, or perfluoro ethyl vinyl ether may be used. In addition, tetrafluoroethylene-hexafluoropropylene copolymer (FEP) or tetrafluoroethylene-perfluoro alkyl vinyl ether copolymer (PFA), which is copolymers of these fluorine-based monomers and olefins represented by ethylene, may also be used. These fluorine-based resins are preferably in a state of being dissolved in a solvent or being dispersed as a granular form in a dispersion medium, such as water or alcohol, because such a state may exhibit electrical conductivity and binder performance when carbon short cut fibers (A) and oxidized fibers (B) are joined together. These fluorine-based resins have water repellency.

The content of the fluorine-based resin in the porous electrode substrate is preferably 10 to 100 parts by mass, and more preferably 10 to 60 parts by mass, when the sum of carbon short cut fibers and oxidized fibers (B) is 100 parts by mass, from the viewpoint of exhibiting electrical conductivity, and strength of the porous electrode substrate.

<Carbon powder (C) and fluorine-based resin>

The mass ratio of carbon powder (C) to fluorine-based resin after the heat-treatment process (3) is preferably 2 : 8 to 8 : 2, and more preferably 4 : 6 to 7 : 3, from the viewpoint of exhibiting electrical conductivity and binder performance.

The content of the sum of the carbon powder (C) and the fluorine-based resin in the porous electrode substrate is preferably 15 to 150 parts by mass, and more preferably 15 to 90 parts by mass, when the sum of carbon short cut fibers and oxidized fibers (B) is 100 parts by mass, from the viewpoint of exhibiting electrical conductivity, and strength of the porous electrode substrate.

<Dispersion solution composed of carbon powder (C) and fluorine-based resin>

The carbon powder (C) and the fluorine-based resin are preferably in a slurry form from the viewpoint of impregnability when they are impregnated within a precursor sheet that includes carbon short cut fibers (A) and oxidized fiber precursor short cut fibers (b) to be described below. When the carbon powder (C) and the fluorine-based resin are dispersed in a dispersion solvent to provide the dispersion solution in a slurry form, water, alcohol, or a mixture thereof is preferably used as the dispersion solution from the viewpoint of handling properties and production cost.

When water is used as the dispersion solvent, a dispersant such as a surfactant, may be used to disperse the carbon powder (C) and the fluorine-based resin. The dispersant is not particularly limited, but polyethers, such as polyoxyethylene alkyl phenyl ether, aromatic sulfonates such as naphthalene sulfonate, and the like may be used.

The solid concentration of the dispersion solution of the carbon powder (C) and the fluorine-based resin is preferably 2 to 20% by mass and more preferably 5 to 15% by mass, from the viewpoint of exhibiting the electrical conductivity and the handling property, and unevenly distributing the carbon powder (C) and fluorine-based resin in the vicinity of outer layer of one side while impregnating the carbon powder (C) and fluorine-based resin on the whole sides of the precursor sheet, even though the solid concentration depends on the particle diameter distribution or volume of the carbon powder (C), the easiness of agglomeration, and the particle diameter distribution of the fluorine-based resin. When this concentration is too low, it is difficult to obtain sufficient electrical conductivity, and also, to unevenly distribute on the surface because the carbon powder (C) and the fluorine-based resin are penetrated to the back side of the precursor sheet. When this concentration is too high, any combinations of the carbon powder (C) and the fluorine-based resin are mostly unevenly distributed on the precursor sheet because the viscosity of the dispersion solution is too high, and thus, the carbon powder (C) and the fluorine-based resin are not present in the precursor sheet, thereby decreasing the electrical conductivity of the porous electrode substrate.

The viscosity of the dispersion solution including the carbon powder (C) and the fluorine-based resin is preferably 1000 cP to 10000 cP, and more preferably 2000 cP to 6000 cP%, from the viewpoint of exhibiting electrical conductivity and handling property, and unevenly distributing the carbon powder (C) and the fluorine-based resin in the vicinity of outer layer of one side while impregnating the carbon powder (C) and fluorine-based resin on the whole sides of the precursor sheet, even though the viscosity depends on the particle diameter distribution or volume of the carbon powder (C), the easiness of agglomeration, and the particle diameter distribution of the fluorine-based resin. When this viscosity is too low, it is difficult to obtain sufficient electrical conductivity, and also, to unevenly distribute on the surface because the carbon powder (C) and fluorine-based resin are penetrated to the back side of the precursor sheet. When this viscosity is too high, any combinations of the carbon powder (C) and fluorine-based resin are mostly unevenly distributed on the precursor sheet because the viscosity of the dispersion solution is too high, and thus, the carbon powder (C) and fluorine-based resin are not present in the precursor sheet, thereby decreasing the electrical conductivity of the porous electrode substrate.

The mass ratio of the carbon powder (C) and the fluorine-based resin in the dispersion solution of the carbon powder (C) and the fluorine-based resin is preferably 2 : 8 to 8 : 2 and more preferably 4 : 6 to 7 : 3, from the viewpoint of exhibiting the electrical conductivity and the binder performance.

The average particles diameter of the substantial particles or agglomerate of the carbon powder (C) and the fluorine-based resin is preferably about 0.01 to 50 μm and more preferably 0.1 to 20 μm, from the viewpoint of stopping on the top of the precursor sheet-formed product including carbon short cut fibers and oxidized fiber precursor fibers, and then, unevenly distributing on the surface thereof. The "substantial particles" indicate the particles that are stably present under the environment without strong shear that may destroy agglomerate in the dispersion solution of the carbon powder (C) and the fluorine-based resin. In the case of using graphite powder or the milled fiber as the carbon powder (C), the particles are equivalent to a primary particle. In the case of using carbon black, the particles indicate the structure or agglomerate that is prepared by agglomerating primary particles. In addition, it may be a primary particle of carbon powder (C) or the structure body prepared by agglomerating the agglomeration structure body and the fluorine-based resin.

<Conductive particle>

The oxidized fibers (B) may preferably include conductive particles from the viewpoint of the electrical conductivity or the productivity. The conductive particles are derived from the things included in the oxidized fiber precursor fibers (b), respectively. The content of the conductive particles in the oxidized fiber (B) is preferably 10% by mass or more with respect to the total mass of the oxidized fibers (B) from the viewpoint of electrical conductivity in the oxidized fibers (B), and preferably 90% by mass or less from the viewpoint of productivity.

The oxidized fibers (B) are the fibers prepared by oxidizing the oxidized fiber precursor fibers (b) to be described below, and include the polymer prepared by oxidizing the polymer capable of being used for the oxidized fiber precursor fibers (b). As described below, such a polymer may include the polymers prepared by oxidizing an acrylic polymer, a cellulosic polymer, or a phenolic polymer.

The oxidized fiber precursor fibers (b) of the present embodiment preferably also include conductive particles, from the viewpoint of having sufficient fiber strength, suppressing the shrinkage during the heat-treatment, and having electrical conductivity after the heat-treatment. As the conductive particles, the carbon powders such as carbon black, graphite powder, carbon fiber milled fibers, active carbon, or nanocarbon may be used, but the invention is not limited thereto. From the viewpoint of exhibiting productivity and electrical conductivity, and reducing cost, carbon black, or the mixture of carbon black and graphite powder is preferably used.

Carbon black is generally present as a structure body (agglomerates) in which primary particles having an average particle diameter of several tens of nanometers are joined together by melting to form structures, and further, the structures are joined together by van der Waals force. Carbon black has a significantly larger number of particles per unit mass than the graphite powder, and at a certain critical concentration or more, the agglomerates are connected like a three-dimensional network to form macroscopic conductive paths. Therefore, conductive particles preferably contain at least carbon black. The proportion of carbon black included in carbon powder is more preferably in the range of 70 to 100% by mass, particularly preferably in the range of 80 to 90% by mass, with respect to the total mass of carbon powder. When the proportion of carbon black is 70% by mass or more, three-dimensional network-like conductive paths are easily formed.

On the other hand, as the carbon powder, graphite powder is preferably added. Graphite powder is composed of a highly crystalline graphite structure, and thus, exhibits high electrical conductivity. The average particle diameter of the primary particles of the graphite powder is generally several micrometers to several hundred micrometers. The proportion of graphite powder included in carbon powder is preferably in the range of 10 to 20% by mass with respect to the total mass of carbon powder.

Furnace black, channel black, acetylene black, lamp black, thermal black, ketjen black, or the like may be used as the carbon black. Acetylene black or ketjen black having excellent electrical conductivity and dispersibility is more preferred, and ketjen black is particularly preferred from the viewpoint of electrical conductivity. Pyrolytic graphite, spheroidal graphite, scale-like graphite, lump graphite, earthy graphite, artificial graphite, or expanded graphite may be used as the graphite powder. Pyrolytic graphite or spheroidal graphite having excellent electrical conductivity is preferred.

The oxidized fibers (B) including the conductive particles are obtained by performing the oxidization by the heat-treatment of the oxidized fiber precursor fibers (b) including the conductive particles. Therefore, the oxidized fibers (B) including the conductive particles are derived from the oxidized fiber precursor fibers (b) including the conductive particles. From the viewpoint of electrical conductivity and productivity, the oxidized fibers (B) preferably include the conductive particles. When using the carbon powder as the conductive particles, the content of the carbon powder in the oxidized fibers (B) is preferably 10% by mass or more from the viewpoint of electrical conductivity and preferably 90% by mass or less from the viewpoint of productivity, with respect to the total mass of the oxidized fibers (B).

When using the carbon powder as the conductive particles in "the oxidized fibers (B) including the conductive particles" obtained by heat-treating the oxidized fiber precursor fibers (b) including the conductive particles, for the carbon powder, the respective primary particles may be uniformly dispersed, the primary particles may be agglomerated, or the primary particles or the agglomerate thereof may be uniformly dispersed or locally dispersed in the oxidized fibers (B). As the carbon powder locally dispersed in the oxidized fibers (B), the carbon powder having the core-shell structure, in which the carbon powder is locally formed in the center of fiber, and the other way, the carbon powder having the core-shell structure, in which the carbon powder is locally formed on the surface layer part of fiber, may be used. From the viewpoint of improving the electrical conductivity and mechanical strength of the porous electrode substrate, it is preferred to form the core-shell structure, in which the carbon powder is locally present on the surface layer part of fiber.

From the viewpoint of exhibiting sufficient fiber strength, suppressing the shrinkage during the heat-treatment, and exhibiting the electrical conductivity after the heat-treatment, when the carbon powder is used as the conductive particle, the average content of the carbon powder in the oxidized fiber precursor fiber including the carbon powder is preferably 10% by mass or more and 90% by mass or less with respect to the total mass of the oxidized fiber precursor fibers. In addition, the upper limit of the average content of the carbon powder is preferably high within the range capable of spinning, but from the viewpoint of spinning stability during the step of preparing fibers, it is more preferably 70% by mass or less.

When the carbon powder is locally present in the oxidized fiber precursor fiber, from the viewpoint of electrical conductivity, the content of carbon powder in the locally presenting part (in other words, the part having the highest content of carbon powder) is preferably 60% by mass or more and 90% by mass or less with respect to the total mass of this part of the oxidized fiber precursor fiber. In addition, it is more preferably 70% by mass or more and 90% by mass or less.

<Occupation rate of fluorine-based resin including carbon powder (C)>

The porous electrode substrate of the present embodiment is substantially formed on the layer A including only the fluorine-based resin including the carbon powder (C) and the layer B, in which the carbon short cut fibers are substantially joined by the fluorine-based resin including the carbon powder (C). Therefore, it is preferred that the layer A is formed on one side or both sides of the layer B. Here, the meaning "being substantially formed of only the fluorine-based resin including the carbon powder (C)" indicates that most of the included components except impurities and the like include the fluorine-based resin including the carbon powder (C). In more detail, it is indicated that about 95 to 100% thereof is the carbon powder (C) and the fluorine-based resin. Similarly, the meaning "the carbon short cut fibers are joined substantially by the fluorine-based resin including the carbon powder (C)" indicates that most of the included components except impurities and the like, include the carbon short cut fibers, the carbon powder (C), and the fluorine-based resin. In more detail, it is indicated that about 95 to 100% thereof is the carbon short cut fibers, the carbon powder (C), and the fluorine-based resin.

In addition, from the viewpoint of the gas diffusivity and electrical conductivity of the porous electrode substrate, and the drainage characteristics of generated water at the time of power generation, the occupation rate of the fluorine-based resin including the carbon powder (C) in the layer B is preferably 20% to 80%. In addition, from the viewpoint of suppressing the decrease in the gas diffusivity and electrical conductivity due to the large change of the structure in the layer B or from the viewpoint of suppressing the inhibition in the drainage characteristics of generated water at the time of power generation, the change of the occupation rate of the fluorine-based resin including the carbon powder (C) in the thickness direction of the layer B is preferably $\pm$ 3% or more and $\pm$ 15% or less. The occupation rate and the change of the occupation rate of the fluorine-based resin including the carbon powder (C) are calculated by the following Equations (I) and (II) of the methods.

Occupation rate of fluorine-based resin including carbon powder (C) in layer B: volume of fluorine-based resin including carbon powder (C) occupied in layer B/(volume of layer B - volume of space occupied in layer B) ... (I)

Change in occupation rate: (occupation rate of fluorine-based resin including carbon powder (C) in layer B divided in thickness of 20 $\mu$m) - (occupation rate of fluorine-based resin including carbon powder (C) in adjacent layer B divided in thickness of 20 $\mu$m) ... (II)

In addition, the occupation rate of the fluorine-based resin including the carbon powder (C) is measured by the following method.

For the occupation rate of the fluorine-based resin including the carbon powder (C) in the layer A or the layer B, the photograph of section scanning electron microscope, in which the photograph of the cross-section of the porous electrode substrate cut with a cross-section polisher is taken with the magnification of 300 times, is divided by the carbon short cut fibers (A1), the oxidized fibers (B), the fluorine-based resin including the carbon powder (C), and the cavity part, and then, the occupation rate of the fluorine-based resin including the carbon powder (C) in the layer B is calculated.

<Method for manufacturing porous electrode substrate>

The porous electrode substrate of the present embodiment may be produced, for example, by the following methods.

A first manufacturing method is a method of sequentially performing (1) a process of preparing a precursor sheet with unevenly-distributed fluorine-based resin by applying a dispersion solution including a carbon powder (C) and a fluorine-based resin on the surface of one side or both sides of a precursor sheet, in which carbon short cut fibers (A1) are dispersed in planar direction with the directions of the respective fibers being substantially on the same plane, and thus, by unevenly distributing the fluorine-based resin including the carbon powder (C) in the vicinity of the surface layer of one side or both sides of the precursor sheet; and
(2) a process of heating the precursor sheet with unevenly-distributed fluorine-based resin at a temperature of 150°C or higher and lower than 400°C after the process (1).

A second manufacturing method is a method of using the dispersion solution, in which the dispersion solution including the carbon powder (C) and the fluorine-based resin has the solid concentration of 2% or more and 20% or less.

A third manufacturing method is a method using the dispersion solution, in which a viscosity of the dispersion solution including the carbon powder (C) and the fluorine-based resin is 1000 cP or more and 10000 cP or less.

A fourth manufacturing method is a method, in which a cake layer including the carbon powder (C) and the fluorine-based resin is formed in the vicinity of the surface layer of one side by impregnating the carbon powder (C) and the fluorine-based resin in substantially entire surface of the surface of the precursor sheet by applying the dispersion solution including the carbon powder (C) and the fluorine-based resin on the surface of another side of the precursor sheet to unevenly distribute the carbon powder (C) and the fluorine-based resin in the vicinity of the surface layer of one side, in the process (2).

A fifth manufacturing method is a method, in which, the method including (3) a process of preparing a precursor sheet X-1 by distributing the carbon short cut fiber (A1) and an oxidized fiber precursor fiber (b1) to be the fiber directions of the respective fibers being distributed in the planar direction, before the process (1), is sequentially performed.

A sixth manufacturing method is a method, in which the method including (4) a process of preparing the precursor sheet X-3 by laminating and integrating the precursor sheet X-2 prepared by distributing a carbon short cut fiber (A2) and an oxidized fiber precursor fiber (b2) on the precursor sheet X-1 between the process (3) and the process (1) is sequentially performed.

A seventh manufacturing method is a method, in which the method including (5) a process of forming a three-dimensional entangled structure in the precursor sheet X-1 by performing an entanglement treatment to the precursor sheet X-1 between the process (3) and the process (1) is sequentially performed.

A eighth manufacturing method is a method, in which the method including (5) a process of forming the three-dimensional entangled structure by performing the entanglement treatment of the precursor sheet X-3 between the process (4) and the process (1) is sequentially performed.

A ninth manufacturing method is a method, in which the method including (6) a process of heat-pressing molding the precursor sheet at a temperature of lower than 200°C, before the process (1) is sequentially performed.

A tenth manufacturing method is a method, in which the carbon powder (C) and the fluorine-based resin are applied several times in the process (1).

<Precursor sheet>

The precursor sheet of the present embodiment is a sheet to be a precursor of a porous electrode substrate, and is composed of carbon short cut fibers. In addition, the precursor sheet is also composed of the carbon short cut fibers and oxidized fiber precursor fibers. Therefore, as the precursor sheet of the present embodiment, the precursor sheet including the carbon short cut fibers (A) or the precursor sheet including the carbon short cut fibers (A) and the oxidized fiber precursor fibers (b) may be used. In addition, the precursor sheet including the carbon short cut fibers (A) and resin carbide may be also used.

<Precursor sheet>

The precursor sheet is prepared by dispersing the carbon short cut fibers (A), or the carbon short cut fibers (A) and the oxidized fiber precursor fibers (b) in the planar direction. The dispersing of the fibers in the planar direction means that the fiber directions of the respective fibers are respectively on the same plane and the long directions of the fibers are almost parallel to each other. In detail, the almost parallel to each other is the state, in which when observing the cross section of the precursor sheet with the magnification of 200 to 500 times (for example, 300 times) using a scanning electron microscope in the same manner as the cross section of the porous electrode substrate as described above, the observable fibers are crossed to each other, and the average of angles with the horizontal planes of the carbon short cut fibers measured is less than 3° or the maximum value of angles with the oxidized fibers (B) and the horizontal planes (sheet planes) measured is less than 10°. In addition, when determining the average value and the maximum value of angles, the measured points may be 50 points, for example. The precursor sheet may not have the above-described three-dimensional entangled structure. The precursor sheet may form the three-dimensional entangled structure by the entanglement treatment to be described below.

The mass ratio of the carbon short cut fiber (A) and the oxidized fiber precursor fiber (b) constituting the precursor sheet is preferably 40 : 60 to 90 : 10 and more preferably 50 : 50 to 90 : 10.

For the precursor sheet, a plurality of sheets having different mass ratio or types of the carbon short cut fibers (A) and the oxidized fiber precursor fibers (b) is preferably laminated and integrated. By constituting the precursor sheet in such a manner, the above-described carbon powder (C) and fluorine-based resin may be effectively and unevenly distributed on the surface of the precursor sheet.

In the present embodiment, when using the precursor sheet including the carbon short cut fibers and the oxidized fiber precursor fibers, as the precursor sheet in the present embodiment, the precursor sheet X-1 including the carbon short cut fibers (A1) and the oxidized fiber precursor fibers (b1) or the precursor sheet X-3 prepared by laminating and integrating the precursor sheet X-2 by distributing the carbon short cut fibers (A2) and the oxidized fiber precursor fibers (b2) on the precursor sheet X-1 including the carbon short cut fibers (A1) and the oxidized fiber precursor fibers (b1) may be used.

<Precursor sheet X-1>

The precursor sheet X-1 is prepared by distributing the carbon short cut fibers (A1) and the oxidized fiber precursor fibers (b1) in a planar direction, and does not have a three-dimensional entangled structure. For the precursor sheet X-1, the three-dimensional entangled structure may be formed by performing the entanglement treatment to be described below.

The mass ratio of the carbon short cut fibers (A1) and the oxidized fiber precursor fibers (b1) constituting the precursor sheet X-1 is preferably 40 : 60 to 90 : 10 and more preferably 50 : 50 to 90 : 10. When the precursor sheet X-2 and the precursor sheet X-3 to be described below are not used, from the viewpoint of unevenly distributing the above-described carbon powder (C) and the fluorine-based resin on the surface of the precursor sheet, a fibril-formed oxidized fiber precursor fiber (b1-2) is preferably used as the oxidized fiber precursor fiber (b1).

<Precursor sheet X-2 and precursor sheet X-3>

The precursor sheet X-2 is prepared by distributing the carbon short cut fibers (A2) and the oxidized fiber precursor fibers (b2) in a planar direction on the precursor sheet X-1, and is laminated and integrated to be the precursor sheet X-3. For the precursor sheet X-3, the three-dimensional entangled structure may be formed by performing the entanglement treatment to be described below.

The mass ratio of the carbon short cut fibers (A2) and the oxidized fiber precursor fibers (b2) constituting the precursor sheet X-2 is preferably 40 : 60 to 90 : 10 and more preferably 50 : 50 to 90 : 10. Therefore, the mass ratio of the carbon short cut fibers (A1) and/or carbon short cut fibers (A2) and the oxidized fiber precursor fibers (b1) and/or the oxidized fiber precursor fibers (b2) constituting the precursor sheet X-3 is preferably 40 : 60 to 90 : 10 and more preferably 50 : 50 to 90 : 10. When using the precursor sheet X-2 and the precursor sheet X-3, from the viewpoint of unevenly distributing the above-described carbon powder (C) and fluorine-based resin on the surface of the precursor sheet, it is preferable that the fiber diameter of the oxidized fiber precursor fiber (b2) used for the precursor sheet X-2 is smaller than the fiber diameter of the oxidized fiber precursor fiber (b1) used for the precursor sheet X-1 or the mixed ratio thereof is high, and in the case of using the fibril-formed oxidized fiber precursor fiber (b2-2), it is preferable that the freeness is small.

<Preparing of precursor sheet (1)>

In preparing the precursor sheet, paper making methods, such as a wet method in which the carbon short cut fibers (A), or the carbon short cut fibers (A) and the oxidized fiber precursor fibers (b) are dispersed in a liquid medium to form paper; and a dry method in which the carbon short cut fibers (A), or the carbon short cut fibers (A) and the oxidized fiber precursor fibers (b) are dispersed in air and allowed to fall and accumulate, may be applied, but the wet method is preferred. It is preferred to perform wet paper making, using the fibril-formed oxidized precursor fibers (b-2) so as to facilitate the opening of carbon short cut fibers (A) into single fibers, to prevent the opened the single fibers from reconverging, and further to tangle the carbon short cut fibers (A) with the oxidized fiber precursor fibers (b), in order to improve sheet strength and to ensure that the sheet is substantially binder free. In addition, in the case of performing the entanglement treatment to be described below, even using the oxidized fiber precursor short cut fibers (b-1), it is possible to be substantially binder free. In addition, from the viewpoint of unevenly distributing the above-described carbon powder (C) and the fluorine-based resin on the surface of the precursor sheet, the fibril-formed oxidized fiber precursor fibers (b-2) is preferably used as the oxidized fiber precursor fibers (b).

Examples of mediums in which the carbon short cut fibers (A), or the carbon short cut fibers (A) and the oxidized fiber precursor fibers (b) are dispersed may include mediums, such as water or alcohol, in which the oxidized fiber precursor fibers (b) are not dissolved. However, from the viewpoint of productivity, water is preferred.

The precursor sheet may be produced either by a continuous method or a batch method. However, from the viewpoint of productivity and mechanical strength of the precursor sheet, it is preferable to produce the precursor sheet by the continuous method. The basis weight of the precursor sheet is preferably about 10 to 200 g/m$^2$. In addition, the thickness of the precursor sheet is preferably about 20 to 400 $\mu$m.

<Preparing of precursor sheet X-1 (1)>

In preparing the precursor sheet X-1, paper making methods, such as a wet method in which the carbon short cut fibers (A1) and the oxidized fiber precursor fibers (b1) are dispersed in a liquid medium to form paper; and a dry method in which the carbon short cut fibers (A1) and the oxidized fiber precursor fibers (b1) are dispersed in the air and allowed to fall and accumulate, may be applied, but the wet method is preferred. Specifically it is preferred to perform wet paper making, using the fibril-formed oxidized precursor fibers (b1-2) so as to facilitate the opening of carbon short cut fibers (A1) into single fibers, to prevent the opened single fibers from reconverging, and further to tangle the carbon short cut fibers (A1) with the oxidized fiber precursor fibers (b1), in order to improve sheet strength and to ensure that the sheet is substantially binder free. In addition, in the case of performing the entanglement treatment to be described below, even using the oxidized fiber precursor short cut fibers (b1'-1), it is possible to be substantially binder free. In addition, when the precursor sheet X-2 and the precursor sheet X-3 to be described below are not used, from the viewpoint of unevenly distributing the above-described carbon powder (C) and the fluorine-based resin on the surface of the precursor sheet, the fibril-formed oxidized fiber precursor fibers (b1-2) is preferably used as the oxidized fiber precursor fibers (b1).

Examples of mediums in which the carbon short cut fibers (A1) and the oxidized fiber precursor fibers (b1) are dispersed may include mediums, such as water and alcohol, in which the oxidized fiber precursor fibers (b1) are not dissolved. However, from the viewpoint of productivity, water is preferred.

The precursor sheet X-1 may be produced either by a continuous method or a batch method. However, from the viewpoint of productivity and mechanical strength of the precursor sheet X-1, it is preferable to produce the precursor sheet X-1 by the continuous method. The basis weight of the precursor sheet X-1 is preferably about 10 to 200 g/m$^2$. In addition, the thickness of the precursor sheet X-1 is preferably about 20 to 400 $\mu$m.

<Preparing of precursor sheet X-3 (4)>

In preparing the precursor sheet X-3, paper making methods, such as a wet method in which the carbon short cut fibers (A2) and the oxidized fiber precursor fibers (b2) are dispersed in a liquid medium to form paper, thereby laminating and integrating on the precursor sheet X-1; and a dry method in which the carbon short cut fibers (A2) and the oxidized fiber precursor fibers (b2) are dispersed in the air and allowed to fall and accumulate, thereby laminating and integrating on the precursor sheet X-1, may be applied, but the wet method is preferred. As the oxidized fiber precursor fibers (b2), the fibril-formed oxidized fiber precursor fibers (b2-2) are preferably used to perform wet paper making. By using such a method, it is possible to facilitate the opening of carbon short cut fibers (A2) into single fibers, to prevent the opened single fibers from reconverging, and further to tangle the carbon short cut fibers (A2) with the oxidized fiber precursor fibers (b2), in order to improve sheet strength and to ensure that the sheet is substantially binder free. In addition, in the case of performing the entanglement treatment to be described below, even using the oxidized fiber precursor short cut fibers (b2-1), it is possible to be substantially binder free.

When using the precursor sheet X-2 and the precursor sheet X-3, it is preferable that the fiber diameter of the oxidized fiber precursor fiber (b2) used for the precursor sheet X-2 is smaller than the fiber diameter of the oxidized fiber precursor fiber (b1) used for the precursor sheet X-1 or the mixed ratio thereof is high. Such a condition is preferred from the viewpoint of unevenly distributing the above-described carbon powder (C) and fluorine-based resin on the surface of the precursor sheet. In addition, in the case of using the fibril-formed oxidized fiber precursor fiber (b2-2), the freeness is preferably small.

Examples of mediums in which the carbon short cut fibers (A2) and the oxidized fiber precursor fibers (b2) are dispersed may include mediums, such as water and alcohol, in which the oxidized fiber precursor fibers (b1) and the oxidized fiber precursor fibers (b2) are not dissolved. However, from the viewpoint of productivity, water is preferred.

The precursor sheet X-2 and the precursor sheet X-3 may be produced either by a continuous method or a batch method. However, such as the precursor sheet X-1, from the viewpoint of productivity and mechanical strength, it is preferable to produce the precursor sheets by the continuous method. The basis weight of the precursor sheet X-2 is preferably about 5 to 100 g/m$^2$. In addition, the thickness of the precursor sheet X-2 is preferably about 5 to 100 $\mu$m. Therefore, the basis weight of the precursor sheet X-3 is preferably about 10 to 200 g/m$^2$. In addition, the thickness of the precursor sheet X-3 is preferably about 20 to 400 $\mu$m.

<Entanglement treatment (5)>

The entanglement treatment in which the carbon short cut fibers and the oxidized fiber precursor fibers in the precursor sheet are entangled is not particularly limited as long as the entanglement treatment is a method in which a three-dimensional entangled structure is formed. The entanglement treatment may be performed by a mechanical entanglement method such as a needle punching method, a high-pressure liquid jet method such as a water jet punching method, a high-pressure gas jet method such as a steam jet punching method, or a method of a combination thereof. The high-pressure liquid jet method is preferred because the breakage of the carbon short cut fibers in the entanglement treatment process can be suppressed, and sufficient entanglement properties can be obtained.

The high-pressure liquid jet treatment is a treatment in which the carbon short cut fibers and the oxidized fiber precursor fibers are entangled in the precursor sheet by placing the precursor sheet on a support member having a substantially smooth surface, and allowing a columnar liquid flow, a fan-shaped liquid flow, a slit liquid flow, or the like jetted at a pressure of 0.1 MPa or more to act on the precursor sheet. Here, for the support member that has a substantially smooth surface, any member may be used as long as the pattern on the support member is not formed on the obtained three-dimensional entangled structure, and the jetted liquid is quickly removed. Specific examples thereof may include a 30 to 200 mesh wire net or a plastic net or a roll.

The three-dimensional entangled structure precursor sheet may be continuously produced by sheeting the precursor sheet that includes the carbon short cut fibers and the oxidized fiber precursor fibers, and then by performing the entanglement treatment of the carbon short cut fibers with the oxidized fiber precursor fibers in the precursor sheet by the high-pressure liquid jet treatment or the like, on the support member having a substantially smooth surface, which is preferred from the viewpoint of productivity.

The liquid used for the high-pressure liquid jet treatment is not particularly limited as long as it is a solvent that does not dissolve the treated fibers. Usually, water is preferably used. Water may be warm water. The hole diameter of each jet nozzle in high-pressure liquid jet nozzles is preferably 0.06 to 1.0 mm, and more preferably 0.1 to 0.3 mm, in the case of a columnar flow. The distance between the nozzle jet holes and the laminate is preferably in the range of about 0.5 to 5 cm. The pressure of the liquid is 0.1 MPa or more, and preferably 0.5 MPa or more. The entanglement treatment may be performed in one row or a plurality of rows. When the entanglement treatment is performed in a plurality of rows, it is effective to make the pressure in the high-pressure liquid jet treatment higher in the second and subsequent rows than in the first row.

The entanglement treatment of the precursor sheet by high-pressure liquid jet may be repeated a plurality of times. In other words, after the high-pressure liquid jet treatment of the precursor sheet X-1 is performed, it is possible to further perform the high-pressure liquid jet treatment to the precursor sheet X-3 in which the precursor sheet X-2 is laminated and integrated, or it is possible to turn over the three-dimensional entangled structure precursor sheet being made, and perform the high-pressure liquid jet treatment from the opposite side. In addition, these operations may be repeated.

When the three-dimensional entangled structure precursor sheet is continuously produced, a striped track pattern derived from the formation of the rough and fine structure of the sheet, in the sheeting direction, may be suppressed by vibrating the high-pressure liquid jet nozzle, which is provided with nozzle holes in one row or a plurality of rows, in the width direction of the sheet. The mechanical strength in the sheet width direction may be exhibited by suppressing the striped track pattern in the sheeting direction. In addition, when a plurality of the high-pressure liquid jet nozzles provided with nozzle holes in one row or a plurality of rows is used, a periodic pattern that appears in the three-dimensional entangled structure precursor sheet may also be suppressed by controlling the number of vibrations and the vibration phase difference of the high-pressure liquid jet nozzles in the width direction of the sheet.

<Unevenly distributing carbon powder (C) and fluorine-based resin in the vicinity of outer layer of one side of precursor sheet by applying carbon powder (C) and fluorine-based resin on surface of other side of precursor sheet (1)>

A method of unevenly distributing the carbon powder (C) in the vicinity of the outer layer of other side of the precursor sheet by applying the carbon powder (C) and the fluorine-based resin is not particularly limited as long as it is the method for applying the carbon powder and the fluorine-based resin on the surface of other side of the precursor sheet, but a method of uniformly coating the surface of the precursor sheet with carbon powder and the fluorine-based resin, using a coater, a dip-nip method using a squeezing apparatus, and the like may be used. As the method of unevenly distributing the carbon powder (C) by applying the carbon powder (C) and the fluorine-based resin in the vicinity of the surface of one side or both sides of the precursor sheet, a method of coating the surface of the precursor sheet with the carbon powder and the fluorine-based resin using a coater is preferred.

The number of times of applying for the operation of the application of the carbon powder (C) and the fluorine-based resin is not particularly limited, but it is also preferable to perform the applications several times, from the viewpoint of unevenly distributing the carbon powder (C) in the vicinity of the outer layer of one side or both sides of the precursor sheet. When the number of times of applying is too many, the production cost is poor, and thus, two to four times are preferably performed. When the number of times of the applying is plural, per application times, the same slurry may be used, or slurries having different slurry concentrations, and different types and mixing ratios of the carbon powder (C) and the fluorine-based resin may be used for impregnation in a precursor sheet with a slurry of carbon powder (C) and the fluorine-based resin.

For the operation of the applications, a method for further applying may be the same applying method or different applying method.

In addition, the amount of carbon powder and the fluorine-based resin that is used for impregnation in the thickness direction in the precursor sheet may be uniform or may have a concentration gradient. However, in the present embodiment, since the carbon powder (C) and the fluorine-based resin are unevenly distributed on the surface of one side or both sides of the precursor sheet, the amount that is used for impregnation on the surface of the sheet is higher than the amount that is used for impregnation in the sheet.

In addition, the carbon powder (C) and the fluorine-based resin is preferably in a slurry form from the viewpoint of impregnatability when being impregnated in the precursor sheet including the carbon short cut fibers (A) and oxidized fiber precursor fibers (b) to be described below. As a dispersion solvent, from the viewpoint of handing property and production cost, water, alcohol, or a mixture thereof is preferably used.

In addition, when the carbon powder (C) is unevenly distributed in the vicinity of the surface layer of other side of the precursor sheet by applying the dispersion solution including the carbon powder (C) and the fluorine-based resin, it is preferable to unevenly distribute the carbon powder (C) and the fluorine-based resin in the vicinity of the surface layer of one side by forming a cake layer including the carbon powder (C) and the fluorine-based resin in the vicinity of the surface layer of one side while the dispersion solution that includes the carbon powder (C) and the fluorine-based resin, and preferably, is substantially composed of the carbon powder (C) and the fluorine-based resin is impregnated in substantially entire surface of the surface of the precursor sheet. The cake layer is formed by depositing the carbon powder (C) and the fluorine-based resin on the surface of porous structure body including the carbon short cut fibers (A) and oxidized fiber precursor fibers (b) that form the precursor sheet to be the form in which the carbon powder (C) and the fluorine-based resin is filtered and remained on the cake layer. Therefore, as a result, the carbon powder (C) and the fluorine-based resin is unevenly distributed in the vicinity of the surface layer of one side of the precursor sheet.

By the process (1) through such an operation, each of the precursor sheets is to be the precursor sheet with unevenly-distributed fluorine-based resin, which is impregnated with the carbon powder and the fluorine-based resin.

<Heat treatment (2)>

Next, the operation of the heat treatment of the precursor sheet with unevenly-distributed fluorine-based resin, which is impregnated with the carbon powder and the fluorine-based resin, is performed at the temperature of 150°C or higher and lower than 400°C. By the heat treatment, it is possible to properly join the carbon short cut fibers by melting the oxidized fiber precursor fibers, and also, to properly join the carbon short cut fibers and the oxidized fibers (B) together by sintering the fluorine-based resin as a binder component. The temperature of heat treatment is preferably the temperature of 200°C or higher and lower than 400°C and more preferably the temperature of 300 to 370°C.

The method of heat treatment is not particularly limited, but a method of heat treating that uses a high-temperature atmosphere furnace, a method of direct heating treatment that uses a hot plate, a hot roll, or the like may be applied. The duration of the heat treatment may be, for example, 1 minute to 2 hours.

When a continuously produced precursor sheet is heat-treated, it is preferable to continuously perform heat treatment over the entire length of the precursor sheet, from the viewpoint of reducing production cost. Particularly, in a case in which the porous electrode substrate is long, when the heat treatment is continuously performed, the productivity of the porous electrode substrate increases, and subsequent MEA production may also be continuously performed, and therefore, the production cost of the fuel cell may be reduced. In addition, from the viewpoint of improving productivity and reducing production cost of the porous electrode substrate and the fuel cell, it is preferable to continuously roll up the produced porous electrode substrate.

<Heat-Pressing molding process (6)>

After performing the impregnation with the carbon powder and the fluorine-based resin (1), it is preferable to perform the heat-pressing molding of the precursor sheet at the temperature of lower than 200°C before heating (2). By performing the heat-pressing molding, it is possible to fuse the carbon short cut fibers with the oxidized fiber precursor fibers, to reduce the uneven thickness of the porous electrode substrate, to prevent fluffing, near the sheet surface, of the carbon short cut fibers and the oxidized fiber precursor fibers that are in a state of being fluffed on the sheet surface due to entanglement treatment, and to prevent short circuit current and gas leakage when putting it in a fuel cell.

For the method of the heat-pressing molding, any technique may be applied as long as it is a technique that can form the precursor sheet evenly by heat-pressing molding. Examples of the technique include a method of hot-pressing the precursor sheet, with a smooth rigid plate placed on both surfaces of the precursor sheet, and a method using a heat roll press apparatus or a continuous belt press apparatus. When a continuously produced precursor sheet is heat-pressing molded, the method using a heat roll press apparatus or a continuous belt press apparatus is preferred. By this method, heat treatment may be continuously performed.

The heating temperature in the heat-pressing molding is preferably lower than 200°C and more preferably 120 to 190°C, in order to effectively make the surface of the precursor sheet smooth. The duration of heat-pressing molding may be, for example, 1 second to 10 minutes.

The molding pressure is not particularly limited. When the content ratio of the oxidized fiber precursor fibers in the precursor sheet is high, the surface of the precursor sheet may be easily made smooth even if the molding pressure is low. At this time, if the molding pressure is higher than necessary, the problem of carbon short cut fibers being broken during heat-pressing molding, the problem of the structure of the porous electrode substrate being too dense, and the like may occur. The molding pressure is preferably about 20 kPa to 10 MPa.

When the precursor sheet, which is sandwiched between two rigid plates, is molded by heat-pressing molding or when the precursor sheet is molded by using a heat roll press apparatus or a continuous belt press apparatus, it is preferable to previously apply a release agent to the rigid plates, the roller, or the belt, or to sandwich mold release papers between the precursor sheet and the rigid plates, the roller, or the belt, so that the oxidized fiber precursor fibers, and the like do not adhere to the rigid plates, the roller or the belt.

<Drying treatment process (7)>

In order to remove the dispersion solvent from the precursor sheet impregnated with carbon powder and the fluorine-based resin, it is preferable to further subject the precursor sheet impregnated with carbon powder and the fluorine-based resin to drying treatment at a temperature of 70°C or higher and lower than 150°C between the process (1) and process (2). The duration of drying treatment may be, for example, 1 minute to 1 hour.

The method of drying treatment is not particularly limited, but heat treatment using a high-temperature atmosphere furnace or direct heating treatment using a hot plate, a hot roll, and the like may be applied. As regards being able to prevent the adhesion of the carbon powder and the fluorine-based resin to the heating source, drying treatment using a high-temperature atmosphere furnace is preferred. When a continuously produced three-dimensional entangled structure precursor sheet is subjected to drying treatment, it is preferable to continuously perform drying treatment over the entire length of the precursor sheet, from the viewpoint of reducing production cost. By this, heat treatment may be continuously performed.

«Membrane-electrode assembly (MEA) and polymer electrolyte fuel cell »

The porous electrode substrate of the present embodiment may be suitably used for a membrane-electrode assembly. In addition, the membrane-electrode assembly using the porous electrode substrate of the present embodiment may be suitably used for a polymer electrolyte fuel cell.

Examples

Hereinafter, the embodiments of the invention will be more described in more detail by Examples. Physical property values and the like in Examples were measured by the following methods. "Parts" means "parts by mass."

(1) Gas permeability

According to ISO-5636-5, the time taken for 200 mL of air to pass through a porous electrode substrate was measured using a Gurley densometer, and the gas permeability (mL/hr/cm$^2$/mmAq) was calculated.

(2) Thickness

The thickness of a porous electrode substrate was measured using a thickness measuring apparatus, Dial Thickness Gage (Trade Name: 7321, manufactured by Mitutoyo Corporation). The size of the measurement element was 10 mm in diameter, and the measurement pressure was set at 1.5 kPa.

(3) Through-plane electrical resistance

For the electrical resistance in the thickness direction (through-plane electrical resistance) of the porous electrode substrate, a porous electrode substrate was sandwiched between gold-plated copper plates and pressurized from above and below the copper plates at 0.6 MPa, and the resistance value when current was allowed to flow at a current density of 10 mA/cm$^2$ was measured. The electrical resistance was obtained from the following formula:

$$\text{Through-plane electrical resistance } (m\Omega \cdot cm^2) = \text{Measured resistance value } (m\Omega) \times \text{Sample area } (cm^2)$$

(4) Content of oxidized fibers (B)

The content of oxidized fibers (B) was calculated from the basis weight of a porous electrode substrate fabricated without impregnation with carbon powder and the fluorine-based resin, and from the basis weight of carbon short cut fibers that were used, by the following formula:

$$\text{Content (\%) of the oxidized fibers (B)} = (W2 - W1) \div W2 \times 100 \ldots \text{(Equation 1)}$$

In the above Equation, W2 is the basis weight (g/m$^2$) of a porous electrode substrate fabricated without impregnation with carbon powder and the fluorine-based resin, and W1 is the basis weight (g/m$^2$) of carbon short cut fibers.

(5) Undulation of porous electrode substrate

The undulation of a porous electrode substrate was calculated from the difference between the maximum value and the minimum value of the height of a porous electrode substrate having a length of 250 mm and a width of 250 mm, when the porous electrode substrate was left at rest on a flat plate.

(6) Occupation rate and change in occupation rate of fluorine-based resin including carbon powder (C)

The photograph of section scanning electron microscope, in which the photograph of the cross-section of the porous electrode substrate cut with a cross-section polisher is taken with the magnification of 300 times, is divided by the carbon short cut fibers (A1), the oxidized fibers (B), the fluorine-based resin including the carbon powder (C), and the cavity part, and then, the occupation rate of the fluorine-based resin including the carbon powder (C) in the layer B is calculated.
Occupation rate of fluorine-based resin including carbon powder (C) in layer B: volume of fluorine-based resin including carbon powder (C) occupied in layer B/(volume of layer B - volume of space occupied in layer B)
Change in occupation rate: (occupation rate of fluorine-based resin including carbon powder (C) in layer B divided in thickness of 20 μm) - (occupation rate of fluorine-based resin including carbon powder (C) in adjacent layer B divided in thickness of 20 μm)

(Example 1)

PAN-based carbon fibers having an average fiber diameter of 7 μm and an average fiber length of 3 mm were prepared as carbon short cut fibers (A). In addition, acrylic short cut fibers having an average fiber diameter of 4 μm and an average fiber length of 3 mm (Trade Name: D122, manufactured by Mitsubishi Rayon Co., Ltd.) were prepared as oxidized fiber precursor short cut fibers (b). In addition, readily splittable acrylic sea-island composite short cut fibers composed of an acrylic polymer and a diacetate (cellulose acetate) that are to be fibrillated by beating (manufactured by Mitsubishi Rayon Co., Ltd., Trade Name: VONNEL M.V.P.-C651, average fiber length: 3 mm) were prepared as oxidized fiber precursor short cut fibers to be fibrillated by beating.

The production of a precursor sheet, and a three-dimensional entangled structure precursor sheet by entanglement treatment were performed by a wet continuous paper making method, and an entanglement treatment method using continuous pressurized water flow jet treatment as described below.

* Wet continuous paper making method

(1) Defibration of carbon short cut fibers (A)

PAN-based carbon fibers that have an average fiber diameter of 7 μm and an average fiber length of 3 mm were dispersed in water including polyacrylamide so that the fiber concentration was 1% (10 g/L), and were subjected to defibration treatment through an agitator to provide defibrated slurry fibers (SA).

(2) Defibration of oxidized fiber precursor short cut fibers

Acrylic short cut fibers that have an average fiber diameter of 4 μm and an average fiber length of 3 mm (Trade Name: D122, manufactured by Mitsubishi Rayon Co., Ltd.) were dispersed in water, so that the fiber concentration was 1% (10 g/L) to provide defibrated slurry fibers (Sb-1).

(3) Defibration of oxidized fiber precursor short cut fibers to be fibrillated by beating

Readily splittable acrylic sea-island composite short cut fibers composed of an acrylic polymer and a diacetate (cellulose acetate) that are to be fibrillated by beating (manufactured by Mitsubishi Rayon Co., Ltd., Trade Name: VONNEL M.V.P.-C651, average fiber length: 3 mm), as the oxidized fiber precursor short cut fibers to be fibrillated by beating, were dispersed in water so that the fiber concentration was 1% (10 g/L) and were subjected to defibration treatment through a disc refiner (manufactured by Kumagai Riki Kogyo Co.,Ltd.) to provide defibrated slurry fibers (Sb-2). The freeness of the carbon fiber precursor short cut fibers to be fibrillated by beating was 60 ml.

(4) Defibration of oxidized fiber precursor short cut fiber having structure in which a large number of fibrils branch

As the oxidized fiber precursor fibers having the structure, in which a large number of fibrils branch, polyacrylonitrile-based pulps having the freeness of 130 ml and the structure, in which a large number of fibrils branch, were prepared by a jet solidification.

The polyacrylonitrile-based pulps were dispersed in water so that the fiber concentration was 1% (10 g/L) to provide defibrated slurry fibers (Sb-2).

(5) Preparation of paper-making slurry

Using the oxidized fiber precursor short cut fibers to be fibrillated by beating as the fibril-formed oxidized fiber precursor fibers, the defibrated slurry fibers (SA), the defibrated slurry fibers (Sb-1), the defibrated slurry fibers (Sb-2), and water for dilution were measured so that the mass ratio of carbon short cut fibers (A), oxidized fiber precursor short cut fibers, and fibril-formed oxidized fiber precursor fibers was 70 : 10 : 20 and the concentration of the fibers in a slurry (hereinafter abbreviated as flocks) was 1.44 g/L, and they were charged into a slurry feed tank to prepare a paper-making slurry.

* Treatment apparatus

The apparatus includes a sheet-shaped material conveying apparatus including a net driving portion and a net in which plain-woven mesh made of a plastic net having a width of 60 cm and a length of 585 cm was connected in a belt shape and was continuously rotated, a paper-making slurry feed portion (the opening width of the slurry feed portion was 48 cm, and the fed slurry amount was 30 L/min), a reduced-pressure dewatering apparatus located under the net, and a pressurized water flow jet treatment apparatus to be described below.

Three of the following two types of nozzles were used as the water jet nozzles.

Nozzle 1: hole diameter $\phi$0.15 mm $\times$ 501 Holes, width direction hole pitch of 1 mm (1001 holes/a width of 1 m), one row arrangement, effective nozzle width of 500 mm

Nozzle 2: hole diameter $\phi$0.15 mm $\times$ 501 Holes, width direction hole pitch of 1 mm (1001 holes/a width of 1 m), one row arrangement, effective nozzle width of 500 mm

Nozzle 3: hole diameter $\phi$0.15 mm $\times$ 1002 Holes, width direction hole pitch of 1.5 mm, three rows arrangement, row pitch of 5 mm, effective nozzle width of 500 mm.

(6) Preparation of precursor sheet and three-dimensional entanglement treatment by pressurized water flow jet

The above paper-making slurry 1 was fed onto a net of the tester by a metering pump. The paper-making slurry was widened to a predetermined size through a flow box for adjusting the slurry into a uniform flow, and fed. Then, the slurry was left at rest, passed through a natural dewatering portion, and completely dewatered by the reduced-pressure dewatering apparatus, and a precursor sheet having a target basis weight of 35 g/m$^2$ was loaded on a net. Simultaneously with the completion of this treatment, the precursor sheet was passed through the apparatus in the order of a pressurized water flow jet pressure of 1 MPa (the nozzle 1), a pressure of 1.5 MPa (the nozzle 2), and a pressure of 1.5 MPa (the nozzle 3) to be subjected to entanglement treatment by the water jet nozzles at the back of the tester.

The precursor sheet after entanglement treatment was dried at 150°C for 3 minutes by a pin tenter tester (Trade Name: PT-2A-400 manufactured by Tsujii Dyeing Machine Manufacturing Co., Ltd.) to obtain a three-dimensional entangled structure precursor sheet having a basis weight of 35 g/m$^2$. The dispersed state of the carbon short cut fibers (A1), the oxidized fiber precursor short cut fibers, and the fibril-formed oxidized fiber precursor fibers in the obtained three-dimensional entangled structure precursor sheet was good.

(7) Heat-pressing molding

Both surfaces of this three-dimensional entangled structure precursor sheet were sandwiched between papers coated with a silicone-based mold release agent, and then, the precursor sheet was continuously subjected to heat-pressing molding by using a roll press apparatus under conditions of 180°C and 3 MPa.

(8) Impregnation and drying treatment

Next, ketjen black (manufactured by Lion Corporation) as the carbon powder (C), a polytetrafluoroethylene particle dispersion solution (Trade Name: PTFE Dispersion 31-JR, manufactured by Du Pont-Mitsui Fluorochemicals Co., Ltd.) as the fluorine-based resin, and also polyoxyethylene octyl phenyl ether as a dispersant were prepared.

A mixture of the carbon powder (C) and the fluorine-based resin was adjusted as follows, and impregnation was performed.

An aqueous dispersion solution adjusted so that the carbon powder (C), the fluorine-based resin, and the dispersant were 6.5% by mass, 6.5% by mass, and 6.5% by mass, with respect to the total mass of the mixture, respectively, was stirred by a homogenizer for 1 hour to prepare a dispersion solution of a mixture of the carbon powder (C) and the fluorine-based resin. The viscosity of this dispersion solution was 2500 cP.

This aqueous dispersion solution was dropped on the surface of one side of the three-dimensional entangled structure precursor sheet after heat-pressing molding, and then, the excess aqueous dispersion solution was removed by a coater apparatus. At this time, some of the aqueous dispersion solution was impregnated in the thickness direction of the three-dimensional entangled structure precursor sheet, but the layer including the carbon powder (C) and the fluorine-based resin in the dispersion solution was formed on the three-dimensional entangled structure precursor sheet. Then, the three-dimensional entangled structure precursor sheet impregnated with the mixture of the carbon powder (C) and the fluorine-based resin was dried by a continuous dryer at 100°C for 10 minutes. By this operation, the carbon powder (C) and fluorine-based resin were unevenly distributed on the surface of one side of the precursor sheet.

(9) Heat-treatment

Thereafter, the precursor sheet was heat-treated in a continuous atmosphere furnace in the air under conditions of 360°C for 10 minutes to obtain a porous electrode substrate.

The obtained porous electrode substrate had no in-plane shrinkage during heat treatment, and had a sheet undulation as small as 2 mm or less, and good gas permeability, good thickness, and good through-plane electrical resistance. In addition, the content of oxidized fibers (B) was 29% by mass with respect to the total mass of the porous electrode substrate. It could be confirmed that the carbon short cut fibers (A) dispersed in the three-dimensional structure body of the obtained porous electrode substrate were joined together via the oxidized fibers (B), and further, the carbon short cut fibers (A) and oxidized fibers (B) were joined together via the carbon powder (C) and the fluorine-based resin. In addition, it could be confirmed that the the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Examples 2 to 5)

The porous electrode substrates were obtained in the same manner as in Example 1, using the defibrated slurry fibers (SA), the defibrated slurry fibers (Sb-1), and the defibrated slurry fibers (Sb-2) as described in Example 1, except that the mass ratio of the carbon short cut fibers (A), the oxidized fiber precursor short cut fibers, and fibril-formed oxidized fiber precursor fibers were adjusted to be the conditions as Tables 1 to 3. The obtained porous electrode substrates had no in-plane shrinkage during heat treatment, had a sheet undulation as small as 2 mm or less, good gas permeability, good thickness and good through-plane electrical resistance. In addition, the contents of the respective oxidized fibers (B) are listed in Tables 1 and 2. It could be confirmed that the carbon short cut fibers (A) dispersed in the three-dimensional structure body of the obtained porous electrode substrate were joined together via the oxidized fibers (B), and further, the carbon short cut fibers (A) and the oxidized fibers (B) were joined together via the carbon powder (C) and the fluorine-based resin. In addition, it could be confirmed that the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Examples 6 to 11)

The porous electrode substrates were obtained in the same manner as in Example 1, except that the dispersion solutions of the mixtures of the carbon powder (C) and the fluorine-based resins were prepared to be the conditions as Tables 1 to 3. The viscosities of the respective dispersion solutions are listed in Table 3. The obtained porous electrode substrates had no in-plane shrinkage during heat treatment, had a sheet undulation as small as 2 mm or less, good gas permeability, good thickness and good through-plane electrical resistance. In addition, the contents of the respective oxidized fibers (B) were 29% by mass with respect to the total mass of the porous electrode substrates. It could be confirmed that the carbon short cut fibers (A) dispersed in the three-dimensional structure body of the obtained porous electrode substrate were joined together via the oxidized fibers (B), and further, the carbon short cut fibers (A) and oxidized fibers (B) were joined together via the carbon powder (C) and the fluorine-based resin. In addition, it could be confirmed that the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Example 12)

A porous electrode substrate was obtained in the same manner as in Example 3, except that acetylene black (Trade Name: Denka Black, manufactured by DENKI KAGAKU KOGYO KABUSHIKI KAISHA) was used instead of Ketjen black in Example 1 as the carbon powder (C). The viscosity of the dispersion solution was 6000 cP. The obtained porous electrode substrate had no in-plane shrinkage during heat treatment, had a sheet undulation as small as 2 mm or less, good gas permeability, good thickness and good through-plane electrical resistance. In addition, the contents of the respective oxidized fibers (B) were 29% by mass with respect to the total mass of the porous electrode substrates. It could be confirmed that the carbon short cut fibers (A) dispersed in the three-dimensional structure body of the obtained porous electrode substrate were joined together via the oxidized fibers (B), and further, the carbon short cut fibers (A) and oxidized fibers (B) were joined together via the carbon powder (C) and the fluorine-based resin. In addition, it could be confirmed that the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Example 13)

A porous electrode substrate was obtained in the same manner as in Example 1, using the defibrated slurry fibers (SA), the defibrated slurry fibers (Sb-1), and the defibrated slurry fibers (Sb-2) as described in Example 1, except that the mass ratio of the carbon short cut fibers (A), the oxidized fiber precursor short cut fibers, and fibril-formed oxidized fiber precursor fiber were adjusted to be the conditions as Tables 1 to 2 and the dispersion solution of the mixture of the carbon powder (C) and the fluorine-based resin was prepared to be the condition as Table 3. The obtained porous electrode substrate had no in-plane shrinkage during heat treatment, had a sheet undulation as small as 2 mm or less, good gas permeability, good thickness and good through-plane electrical resistance. In addition, the content of the respective oxidized fibers (B) was 29% by mass with respect to the total mass of the porous electrode substrate. It could be confirmed that the carbon short cut fibers (A) dispersed in the three-dimensional structure body of the obtained porous electrode substrate were joined together via the oxidized fibers (B), and further, the carbon short cut fibers (A) and oxidized fibers (B) were joined together via the carbon powder (C) and the fluorine-based resin. In addition, it could be confirmed that the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Example 14)

Using the defibrated slurry fibers (SA1), the defibrated slurry fibers (Sb1-1), and the defibrated slurry fibers (Sb2-2) that were the same as Example 1, the defibrated slurry fibers (SA2), the defibrated slurry fibers (Sb2-1), the defibrated slurry fibers (Sb2-2), and water for dilution were measured so that the mass ratio of carbon short cut fibers (A2), oxidized fiber precursor short cut fibers (b2-1), and fibril-formed oxidized fiber precursor fibers (b2-2) like carbon short cut fibers (A1), oxidized fiber precursor short cut fibers (b1-1), and fibril-formed oxidized fiber precursor fibers (b1-2), was 70 : 0 : 30 and the concentration of the fibers in a slurry was 1.44 g/L to prepare a paper-making slurry 2.

A precursor sheet X-1 was obtained in the same manner as in Example 1, except that a target basis weight was to be 28 g/m$^2$, and then, the paper-making slurry 2 was fed on the precursor sheet X-1 onto a the net by a metering pump. The paper-making slurry 2 was widened to a predetermined size through a flow box for adjusting the slurry into a uniform flow, and fed. Then, the slurry was left at rest, passed through a natural dewatering portion, and completely dewatered by the reduced-pressure dewatering apparatus, and a precursor sheet X-2 having a target basis weight of 7 g/m$^2$ was laminated and integrated on the precursor sheet X-1, thereby obtaining a precursor sheet X-3. Simultaneously with the completion of this treatment, the precursor sheet was passed through the apparatus in the order of a pressurized water flow jet pressure of 1 MPa (the nozzle 1), a pressure of 1.5 MPa (the nozzle 2), and a pressure of 1.5 MPa (the nozzle 3) to be subjected to entanglement treatment by the water jet nozzles at the back of the tester.

A porous electrode substrate was obtained in the same manner as in Example 1, except that the precursor sheet X-3 was used.

The obtained porous electrode substrate had no in-plane shrinkage during heat treatment, had a sheet undulation as small as 2 mm or less, good gas permeability, good thickness and good through-plane electrical resistance. In addition, the content of the respective oxidized fibers (B) was 29% by mass with respect to the total mass of the porous electrode substrate. It could be confirmed that the carbon short cut fibers (A1) and carbon short cut fibers (A2) dispersed in the three-dimensional structure body of the obtained porous electrode substrate were joined together via the oxidized fibers (B), and further, the carbon short cut fibers (A1) and carbon short cut fibers (A2), and oxidized fibers (B) were joined together via the carbon powder (C) and fluorine-based resin. In addition, it could be confirmed that the fluorine-based resins including the carbon powder (C) were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Example 15)

A porous electrode substrate was obtained in the same manner as in Example 1, except that the defibrated slurry fibers (Sb1-2) and defibrated slurry fibers (Sb2-2) were used as the oxidized fiber precursor fibers having the structure, in which a large number of fibrils branch instead of the defibrated slurry fibers (Sb1-2) and the defibrated slurry fibers (Sb2-2) of Example 14. The obtained porous electrode substrate had no in-plane shrinkage during heat treatment, had a sheet undulation as small as 2 mm or less, good gas permeability, good thickness and good through-plane electrical resistance. In addition, the content of the respective oxidized fibers (B) was 29% by mass with respect to the total mass of the porous electrode substrate. It could be confirmed that the carbon short cut fibers (A1) and carbon short cut fibers (A2) dispersed in the three-dimensional structure body of the obtained porous electrode substrate were joined together via the oxidized fibers (B), and further, the carbon short cut fibers (A1) and carbon short cut fibers (A2), and oxidized fibers (B) were joined together via the carbon powder (C) and the fluorine-based resin. In addition, it could be confirmed that the fluorine-based resins including the carbon powder (C) were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Examples 16 to 18)

The porous electrode substrates were obtained in the same manner as in Example 2, using the defibrated slurry fibers (SA1), the defibrated slurry fibers (SA2), the defibrated slurry fibers (Sb1), and the defibrated slurry fibers (Sb2) that were the same as Example 14, except that the mass ratios of the carbon short cut fibers (A1) and carbon short cut fibers (A2) and the oxidized fiber precursor short cut fibers and fibril-formed oxidized fiber precursor fibers were adjusted to be the condition as listed in Tables 1 and 2. The obtained porous electrode substrates had no in-plane shrinkage during heat treatment, had a sheet undulation as small as 2 mm or less, good gas permeability, good thickness and good through-plane electrical resistance. In addition, the contents of the respective oxidized fibers (B) are listed in Tables 1 and 2. It could be confirmed that the carbon short cut fibers (A1) and carbon short cut fibers (A2) dispersed in the three-dimensional structure bodies of the obtained porous electrode substrates were joined together via the oxidized fibers (B), and further, the carbon short cut fibers (A1) and carbon short cut fibers (A2), and oxidized fibers (B) were joined together via the carbon powder (C) and the fluorine-based resin. In addition, it could be confirmed that the fluorine-based resins including the carbon powder (C) were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Example 19)

A porous electrode substrate was obtained in the same manner as in Example 14, except that the dispersion solution of the mixture of carbon powder (C) and the fluorine-based resin was prepared to be the condition as listed in Tables 1 and 2. The viscosity of the dispersion solution is listed in Table 3. The obtained porous electrode substrate had no in-plane shrinkage during heat treatment, had a sheet undulation as small as 2 mm or less, good gas permeability, good thickness and good through-plane electrical resistance. In addition, the content of the oxidized fibers (B) was 29% by mass with respect to the total mass of the porous electrode substrate. It could be confirmed that the carbon short cut fibers (A) dispersed in the three-dimensional structure bodies of the obtained porous electrode substrate were joined together via the oxidized fibers (B), and further, the carbon short cut fibers (A) and oxidized fibers (B) were joined together via the carbon powder (C) and the fluorine-based resin. In addition, it could be confirmed that the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Example 20)

A porous electrode substrate was obtained in the same manner as in Example 2, except that the Ketjen black and the spheroidal graphite (Trade Name: SG-BH8, manufactured by Ito Graphite Co., Ltd) of Example 14 were used in the mixed ratio of 8 : 2, as the carbon powder (C). The obtained porous electrode substrate had no in-plane shrinkage during heat treatment, had a sheet undulation as small as 2 mm or less, good gas permeability, good thickness and good through-plane electrical resistance. In addition, the content of the oxidized fibers (B) was 29% by mass with respect to the total mass of the porous electrode substrate. It could be confirmed that the carbon short cut fibers (A) dispersed in the three-dimensional structure bodies of the obtained porous electrode substrate were joined together via the oxidized fibers (B), and further, the carbon short cut fibers (A) and oxidized fibers (B) were joined together via the carbon powder (C) and the fluorine-based resin. In addition, it could be confirmed that the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Example 21)

A porous electrode substrate was obtained in the same manner as in Example 1, except that the entanglement treatment by pressurized water flow jet was not performed. The obtained porous electrode substrate had no in-plane shrinkage during heat treatment, had a sheet undulation as small as 2 mm or less, good gas permeability, good thickness and good through-plane electrical resistance. In addition, the content of the oxidized fibers (B) was 29% by mass with respect to the total mass of the porous electrode substrate. It could be confirmed that the carbon short cut fibers (A) dispersed in the three-dimensional structure bodies of the obtained porous electrode substrate were joined together via the oxidized fibers (B), and further, the carbon short cut fibers (A) and oxidized fibers (B) were joined together via the carbon powder (C) and the fluorine-based resin. In addition, it could be confirmed that the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Example 22)

A porous electrode substrate was obtained in the same manner as in Example 1, except that the heat-pressing molding treatment was not performed. The obtained porous electrode substrate had no in-plane shrinkage during heat treatment, had a sheet undulation as small as 2 mm or less, good gas permeability, good thickness and good through-plane electrical resistance. In addition, the content of the oxidized fibers (B) was 29% by mass with respect to the total mass of the porous electrode substrate. It could be confirmed that the carbon short cut fibers (A) dispersed in the three-dimensional structure bodies of the obtained porous electrode substrate were joined together via the oxidized fibers (B), and further, the carbon short cut fibers (A) and oxidized fibers (B) were joined together via the carbon powder (C) and fluorine-based resin. In addition, it could be confirmed that the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Tables 1 to 4.

(Example 23)

A porous electrode substrate was obtained in the same manner as in Example 1, except that the precursor sheet, in which the carbon short cut fibers (A) were joined via resin carbide, was used. The obtained porous electrode substrate had no in-plane shrinkage during heat treatment, had a sheet undulation as small as 2 mm or less, good gas permeability, good thickness and good through-plane electrical resistance. It could be confirmed that the carbon short cut fibers (A) dispersed in the three-dimensional structure bodies of the obtained porous electrode substrate were joined together via resin carbide, and further, the carbon short cut fibers (A) and the resin carbide were joined together via the carbon powder (C) and fluorine-based resin. In addition, it could be confirmed that the carbon powder (C) and the fluorine-based resin were unevenly distributed on the surface of the porous electrode substrate. Even when a compressive load at a surface pressure of 1.5 MPa was applied to this porous electrode substrate, it was possible to maintain the sheet form. The composition and evaluation results of the porous electrode substrate are listed in Table 4.

(Example 24)

(1) Preparation of membrane-electrode assembly (MEA)

Two of the porous electrode substrates obtained in Example 1 were prepared as porous electrode substrates for a cathode and an anode. In addition, a laminate was prepared in which a catalyst layer (catalyst layer area: 25 cm$^2$, the amount of Pt adhered: 0.3 mg/cm$^2$) composed of catalyst-supporting carbon (catalyst: Pt, the amount of the catalyst supported: 50% by mass) was formed on both surfaces of a perfluorosulfonic acid-based polymer electrolyte membrane (membrane thickness: 30 $\mu$m). This laminate was interposed between the porous carbon electrode substrates for a cathode and an anode, and these were joined to obtain a MEA.

(2) Evaluation of fuel cell characteristics of MEA

The obtained MEA was interposed between two carbon separators having a bellows-like gas flow path to form a polymer fuel cell (unit cell).
The fuel cell characteristics were evaluated by measuring the current density-voltage characteristics of this unit cell. Hydrogen gas was used as the fuel gas, and air was used as the oxidizing gas. The temperature of the single cell was 80°C, the fuel gas utilization rate was 60%, and the oxidizing gas utilization rate was 40%. In addition, the humidification of the fuel gas and the oxidizing gas was performed by passing the fuel gas and the oxidizing gas through bubblers at 80°C, respectively. As a result, the cell voltage of the fuel cell at a current density of 0.8 A/cm$^2$ was 0.632 V, and the internal resistance of the cell was 4.1 mΩ, and the fuel cell exhibited good characteristics.

(Comparative Example 1)

A porous electrode substrate was obtained in the same manner as in Example 1, except that the dispersion solution of the mixture of carbon powder (C) and the fluorine-based resin was not impregnated, but was subjected to a heat-treatment. The obtained porous electrode substrate had no in-plane shrinkage during heat treatment, had a sheet undulation as small as 2 mm or less, good thickness, and good gas permeability. In addition, the content of oxidized fibers (B) was 29% by mass with respect to the total mass of the porous electrode substrate. However, it could be confirmed that even though the carbon short cut fibers (A) dispersed in the three-dimensional structure bodies of the obtained porous electrode substrate were joined together via the oxidized fibers (B), but the carbon short cut fibers (A) and oxidized fibers (B) were not joined together via the carbon powder (C) and the fluorine-based resin, and also the carbon powder (C) and the fluorine-based resins were not unevenly distributed even in the vicinity of the surface of the porous electrode substrate, thereby highly increasing through-plane electrical resistance as compared with Example 1. It could be confirmed that the carbon short cut fibers (A1) dispersed in the three-dimensional structure bodies of the obtained porous electrode substrate were joined together only via the oxidized fibers (B). Even when a compressive load at a surface pressure of 1.5 MPa was applied to this porous electrode substrate, it was possible to maintain the sheet form. The composition and evaluation results of the porous electrode substrate are listed in Table 4.

(Comparative Example 2)

A porous electrode substrate was obtained in the same manner as in Example 1, except that the dispersion solution of the mixture of carbon powder (C) and the fluorine-based resin was adjusted to be the condition as listed in Tables 1 to 3. The viscosity of dispersion solution was 13000 cP. The obtained porous electrode substrate had no in-plane shrinkage during heat treatment, had a sheet undulation as small as 2 mm or less, good thickness, and good gas permeability. In addition, the content of oxidized fibers (B) was 29% by mass with respect to the total mass of the porous electrode substrate. However, it could be confirmed that since the concentration and viscosity of the dispersion solution were very high, the carbon powder (C) and the fluorine-based resin were unevenly distributed on the surface of the porous electrode substrate but the carbon powder (C) and the fluorine-based resin were not almost present in the thickness direction of the porous electrode substrate, and the carbon short cut fibers (A) dispersed in the three-dimensional structure bodies of the obtained porous electrode substrate were joined together via the oxidized fibers (B), but a number of the places where the carbon short cut fibers (A) and oxidized fibers (B) were joined together via the carbon powder (C) and the fluorine-based resin was very small as compared with Example 3, thereby highly increasing through-plane electrical resistance as compared with Example 3. Even when a compressive load at a surface pressure of 1.5 MPa was applied to this porous electrode substrate, it was possible to maintain the sheet form. The composition and evaluation results of the porous electrode substrate are listed in Table 4.

(Comparative Example 3)

A porous electrode substrate was obtained in the same manner as in Example 1, except that the dispersion solution of the mixture of carbon powder (C) and the fluorine-based resin was adjusted to be the condition as listed in Tables 1 to 3. The viscosity of dispersion solution was 600 cP. The obtained porous electrode substrate had no in-plane shrinkage during heat treatment, had a sheet undulation as small as 2 mm or less, good thickness, and good gas permeability. In addition, the content of oxidized fibers (B) was 29% by mass with respect to the total mass of the porous electrode substrate. However, since the concentration and viscosity of the dispersion solution were low, the carbon powder (C) and the fluorine-based resin were not unevenly distributed on the surface of the porous electrode substrate, and the carbon powder (C) and the fluorine-based resin were almost uniformly present in the thickness direction of the porous electrode substrate. It could be confirmed that the carbon short cut fibers (A) dispersed in the three-dimensional structure bodies of the obtained porous electrode substrate were joined together via the oxidized fibers (B), and thus, the carbon short cut fibers (A) and oxidized fibers (B) were joined via the carbon powder (C) and the fluorine-based resin, but the carbon powder (C) and the fluorine-based resin were not unevenly distributed in the vicinity of the surface, and the through-plane electrical resistance and through-plane specific resistance were increased as compared with Example 3. Even when a compressive load at a surface pressure of 1.5 MPa was applied to this porous electrode substrate, it was possible to maintain the sheet form. The composition and evaluation results of the porous electrode substrate are listed in Table 4.

[Table 1]

| | Precursor sheet (X-1) | | | | |
|---|---|---|---|---|---|
| | | | Oxidized fiber precursor fibers (b1) | | |
| | Carbon short cut fibers (A1) | Oxidized fiber precursor short cut fiber precursor Oxidized short cut fibers (b1-1) | fibril-formed oxidized fiber precursor fibers (b1-2) | | Basis weight of X-1 |
| | | | Oxidized fiber precursor fibers in which a large number of fibrils branch | Oxidized fiber precursor short cut fibers to be fibrillated by beating | |
| | (Parts) | (Parts) | (Parts) | (Parts) | (g/m$^2$) |
| Example 1 | 70 | 10 | 0 | 20 | 35 |
| Example 2 | 70 | 10 | 20 | 0 | 35 |
| Example 3 | 70 | 20 | 0 | 10 | 35 |
| Example 4 | 90 | 10 | 0 | 0 | 35 |
| Example 5 | 80 | 10 | 0 | 10 | 35 |
| Example 6 | 70 | 10 | 0 | 20 | 35 |
| Example 7 | 70 | 10 | 0 | 20 | 35 |
| Example 8 | 70 | 10 | 0 | 20 | 35 |
| Example 9 | 70 | 10 | 0 | 20 | 35 |
| Example 10 | 70 | 10 | 0 | 20 | 35 |
| Example 11 | 70 | 10 | 0 | 20 | 35 |
| Example 12 | 70 | 10 | 0 | 20 | 35 |
| Example 13 | 70 | 30 | 0 | 0 | 35 |
| Example 14 | 70 | 10 | 0 | 20 | 28 |
| Example 15 | 70 | 10 | 20 | 0 | 28 |
| Example 16 | 50 | 20 | 0 | 30 | 28 |
| Example 17 | 90 | 10 | 0 | 0 | 28 |
| Example 18 | 80 | 10 | 0 | 10 | 28 |
| Example 19 | 70 | 10 | 0 | 20 | 28 |
| Example 20 | 70 | 10 | 0 | 20 | 28 |
| Example 21 | 70 | 10 | 0 | 20 | 35 |
| Example 22 | 70 | 10 | 0 | 20 | 35 |
| Example 23 | 65 | - | - | - | 38 |
| Comparative Example 1 | 70 | 10 | 0 | 20 | 35 |
| Comparative Example 2 | 70 | 10 | 0 | 20 | 35 |
| Comparative Example 3 | 70 | 10 | 0 | 20 | 35 |

[Table 2]

| | Precursor sheet (X-2) | | | | |
| --- | --- | --- | --- | --- | --- |
| | Carbon short cut fibers (A2) | Oxidized fiber precursor fibers (b2) | | | Basis weight of X-2 |
| | | Oxidized fiber precursor short cut fibers (b2-1) | fibril-formed oxidized fiber precursor fibers (b2-2) | | |
| | | | Oxidized fiber precursor fibers in which a large number of fibrils branch | Oxidized fiber precursor short cut fibers to be fibrillated by beating | |
| | (Parts) | (Parts) | (Parts) | (Parts) | (g/m²) |
| Example 1 | - | - | - | - | - |
| Example 2 | - | - | - | - | - |
| Example 3 | - | - | - | - | - |
| Example 4 | - | - | - | - | - |
| Example 5 | - | - | - | - | - |
| Example 6 | - | - | - | - | - |
| Example 7 | - | - | - | - | - |
| Example 8 | - | - | - | - | - |
| Example 9 | - | - | - | - | - |
| Example 10 | - | - | - | - | - |
| Example 11 | - | - | - | - | - |
| Example 12 | - | - | - | - | - |
| Example 13 | - | - | - | - | - |
| Example 14 | 70 | 0 | 0 | 30 | 7 |
| Example 15 | 70 | 0 | 30 | 0 | 7 |
| Example 16 | 50 | 0 | 0 | 50 | 7 |
| Example 17 | 90 | 0 | 0 | 10 | 7 |
| Example 18 | 60 | 0 | 0 | 40 | 7 |
| Example 19 | 70 | 0 | 0 | 30 | 7 |
| Example 20 | 70 | 0 | 0 | 30 | 7 |
| Example 21 | - | - | - | - | - |
| Example 22 | - | - | - | - | - |
| Example 23 | - | - | - | - | - |
| Comparative Example 1 | - | - | - | - | - |
| Comparative Example 2 | - | - | - | - | - |
| Comparative Example 3 | - | - | - | - | - |

[Table 3]

| | Precursor sheet X-3 | Carbon powder (C1) and fluorine-based resin | | |
| --- | --- | --- | --- | --- |
| | Basis weight of X-3 | Concentration of dispersion solution | | Viscosity of dispersion solution |
| | | Carbon powder (C1) | Fluorine-based resin | |
| | (g/m$^2$) | (% by mass) | (% by mass) | (cP) |
| Example 1 | - | 6.5 | 6.5 | 2500 |
| Example 2 | - | 6.5 | 6.5 | 2500 |
| Example 3 | - | 6.5 | 6.5 | 2500 |
| Example 4 | - | 6.5 | 6.5 | 2500 |
| Example 5 | - | 6.5 | 6.5 | 2500 |
| Example 6 | - | 10.0 | 10.0 | 9500 |
| Example 7 | - | 1.0 | 1.0 | 1100 |
| Example 8 | - | 5.0 | 8.0 | 1800 |
| Example 9 | - | 9.0 | 4.0 | 7200 |
| Example 10 | - | 3.0 | 10.0 | 1300 |
| Example 11 | - | 10.0 | 3.0 | 8200 |
| Example 12 | - | 6.5 | 6.5 | 6000 |
| Example 13 | - | 8.0 | 8.0 | 7500 |
| Example 14 | 35 | 6.5 | 6.5 | 2500 |
| Example 15 | 35 | 6.5 | 6.5 | 2500 |
| Example 16 | 35 | 6.5 | 6.5 | 2500 |
| Example 17 | 35 | 6.5 | 6.5 | 2500 |
| Example 18 | 35 | 6.5 | 6.5 | 2500 |
| Example 19 | 35 | 4.0 | 4.0 | 1500 |
| Example 20 | 35 | 6.5 | 6.5 | 1900 |
| Example 21 | - | 6.5 | 6.5 | 2500 |
| Example 22 | - | 6.5 | 6.5 | 2500 |
| Example 23 | - | 6.5 | 6.5 | 2500 |
| Comparative Example 1 | - | - | - | |
| Comparative Example 2 | - | 12.0 | 12.0 | 13000 |
| Comparative Example 3 | - | 0.5 | 0.5 | 600 |

[Table 4]

| | Porous electrode substrate | | | | | | | |
|---|---|---|---|---|---|---|---|---|
| | Basis weight | Basis weight of carbon powder (C1) and fluorine-based resin | Thickness | Oxidized fibers (B) | Gas permeability | Through-plane electrical resistance | Occupation rate | Change in occupation rate |
| | (g/m²) | (g/m²) | (□m) | (%) | (ml/hr/cm²/mmAq) | (m□□cm²) | (%) | (%) |
| Example 1 | 49 | 14 | 115 | 29 | 120 | 10.2 | 35.0 | 8.0 |
| Example 2 | 49 | 14 | 116 | 29 | 110 | 10.1 | 36.0 | 7.0 |
| Example 3 | 49 | 14 | 115 | 29 | 160 | 9.8 | 40.0 | 8.0 |
| Example 4 | 49 | 14 | 105 | 10 | 400 | 7.8 | 51.0 | 6.0 |
| Example 5 | 49 | 14 | 110 | 20 | 260 | 8.6 | 48.0 | 5.0 |
| Example 6 | 60 | 25 | 125 | 29 | 60 | 9.4 | 38.0 | 16.0 |
| Example 7 | 43 | 8 | 112 | 29 | 230 | 9.9 | 21.0 | 4.0 |
| Example 8 | 49 | 12 | 114 | 29 | 200 | 9.8 | 29.0 | 7.0 |
| Example 9 | 49 | 20 | 122 | 29 | 80 | 9.3 | 41.0 | 13.0 |
| Example 10 | 49 | 10 | 114 | 29 | 120 | 9.9 | 25.0 | 5.0 |
| Example 11 | 49 | 23 | 123 | 29 | 70 | 9.2 | 30.0 | 12.0 |
| Example 12 | 54 | 19 | 121 | 29 | 90 | 9.8 | 55.0 | 13.0 |
| Example 13 | 49 | 21 | 122 | 29 | 70 | 9.1 | 42.0 | 11.0 |
| Example 14 | 49 | 14 | 116 | 29 | 250 | 9.8 | 32.0 | 9.0 |
| Example 15 | 49 | 14 | 115 | 29 | 230 | 9.6 | 30.0 | 8.0 |
| Example 16 | 49 | 14 | 120 | 48 | 100 | 11.5 | 25.0 | 8.0 |
| Example 17 | 49 | 14 | 105 | 10 | 400 | 9.2 | 60.0 | 7.0 |
| Example 18 | 49 | 14 | 110 | 26 | 220 | 9.4 | 35.0 | 6.0 |
| Example 19 | 49 | 13 | 114 | 29 | 230 | 10.0 | 28.0 | 5.0 |
| Example 20 | 49 | 14 | 115 | 29 | 130 | 8.6 | 30.0 | 6.0 |
| Example 21 | 49 | 14 | 114 | 29 | 340 | 11.3 | 36.0 | 8.0 |
| Example 22 | 49 | 14 | 140 | 29 | 400 | 12.8 | 34.0 | 9.0 |

(continued)

| | Porous electrode substrate | | | | | | | |
|---|---|---|---|---|---|---|---|---|
| | Basis weight | Basis weight of carbon powder (C1) and fluorine-based resin | Thickness | Oxidized fibers (B) | Gas permeability | Through-plane electrical resistance | Occupation rate | Change in occupation rate |
| | $(g/m^2)$ | $(g/m^2)$ | $(\square m)$ | (%) | $(ml/hr/cm^2/mmAq)$ | $(m\square\square cm^2)$ | (%) | (%) |
| Example 23 | 51 | 14 | 115 | - | 40 | 4.5 | 36.0 | 8.0 |
| Comparative Example 1 | 35 | 0 | 110 | 29 | 18000 | 280.0 | - | - |
| Comparative Example 2 | 65 | 30 | 110 | 29 | 20 | 35.0 | 15.0 | > 18 |
| Comparative Example 3 | 49 | 14 | 116 | 29 | 5000 | 13.5 | 40.0 | < 2.0 |

INDUSTRIAL APPLICABILITY

According to the invention, a porous electrode substrate, which has a low manufacturing cost, has sufficient electrical conductivity and gas diffusivity, and exhibits good power generation ability with minor structural changes in the porous electrode substrate, and a method for manufacturing the same, can be provided. In addition, it is possible to provide a membrane-electrode assembly and a polymer electrolyte fuel cell, which include such a porous electrode substrate.

**Claims**

1. A method for manufacturing a porous electrode substrate, the method comprising:

   (1) a process of preparing a precursor sheet with unevenly-distributed fluorine-based resin by applying a dispersion solution including a carbon powder (C) and a fluorine-based resin on the surface of one side or both sides of a precursor sheet, in which carbon short cut fibers (A1) are dispersed in a planar direction with the fiber directions of the respective fibers being substantially on the same plane, and thus, by unevenly distributing the fluorine-based resin including the carbon powder (C) in the vicinity of the surface layer of one side or both sides of the precursor sheet; and
   (2) a process of heat-treating the precursor sheet with unevenly-distributed fluorine-based resin at a temperature of 150°C or higher and lower than 400°C after the process (1).

2. The method for manufacturing a porous electrode substrate according to claim 1, wherein the dispersion solution including the carbon powder (C) and the fluorine-based resin has the solid concentration of 2% or more and 20% or less.

3. The method for manufacturing a porous electrode substrate according to claim 1 or 2, wherein a viscosity of the dispersion solution including the carbon powder (C) and the fluorine-based resin is 1000 cP or more and 10000 cP or less.

4. The method for manufacturing a porous electrode substrate according to any one of claims 1 to 3, wherein a cake layer including the carbon powder (C) and the fluorine-based resin is formed in the vicinity of the surface layer of one side by impregnating the carbon powder (C) and the fluorine-based resin in substantially entire surface of the surface of the precursor sheet by applying the dispersion solution including the carbon powder (C) and the fluorine-based resin on the surface of one side of the precursor sheet to unevenly distribute the carbon powder (C) and the fluorine-based resin in the vicinity of the surface layer of one side, in the process (2).

5. The method for manufacturing a porous electrode substrate according to any one of claims 1 to 4, the method further comprising (3) a process of preparing a precursor sheet X-1 by distributing the carbon short cut fiber (A1) and an oxidized fiber precursor fiber (b1) with the fiber directions of the respective fibers being distributed in the planar direction, before the process (1).

6. The method for manufacturing a porous electrode substrate according to claim 5, the method further comprising (4) a process of preparing a precursor sheet X-3 by laminating and integrating a precursor sheet X-2 prepared by distributing a carbon short cut fiber (A2) and an oxidized fiber precursor fiber (b2) on the precursor sheet X-1 between the process (3) and the process (1).

7. The method for manufacturing a porous electrode substrate according to claim 5, the method further comprising (5) a process of forming a three-dimensional entangled structure in the precursor sheet X-1 by performing an entanglement treatment to the precursor sheet X-1 between the process (3) and the process (1).

8. The method for manufacturing a porous electrode substrate according to claim 6, the method further comprising (5) a process of forming a three-dimensional entangled structure by performing an entanglement treatment of the precursor sheet X-3 between the process (4) and the process (1).

9. The method for manufacturing a porous electrode substrate of any one according to claims 1 to 7, the method further comprising (6) a process of heat-pressing molding the precursor sheet at a temperature of lower than 200°C, before the process (1).

10. The method for manufacturing a porous electrode substrate according to any one of claims 1 to 9, wherein the carbon powder (C) and the fluorine-based resin are applied several times in the process (1).

11. A porous electrode substrate being manufactured by the method for manufacturing a porous electrode substrate according to any one of claims 1 to 10.

12. A porous electrode substrate having a structure with carbon short cut fibers joined by a fluorine-based resin including a carbon powder (C), wherein the fluorine-based resin including the carbon powder (C) is unevenly distributed in the vicinity of the surface layer of one side or both sides of the porous electrode substrate in the structure.

13. A porous electrode substrate having a structure with carbon short cut fibers being joined by an oxidized fiber, and also, the carbon short cut fibers and the oxidized fiber being joined by a fluorine-based resin including a carbon powder (C), in which the fluorine-based resin including the carbon powder (C) is unevenly distributed in the vicinity of the surface layer of one side or both sides of the porous electrode substrate in the structure.

14. A porous electrode substrate comprising a layer A that only substantially includes a fluorine-based resin including a carbon powder (C), and a layer B with carbon short cut fibers being substantially joined by the fluorine-based resin including the carbon powder (C), wherein the layer A is formed on one side or both sides of the layer B, an occupation rate, represented by the following Equation (I), of the fluorine-based resin including the carbon powder (C) in the layer B is 20% to 80%, and a change in an occupation rate, represented by the following Equation (II), of the fluorine-based resin including the carbon powder (C) in a thickness direction of the layer B is $\pm 3\%$ or more and $\pm 15\%$ or less:

$$\text{Occupation rate of fluorine-based resin including carbon powder (C) in layer B:}$$

$$\text{volume of fluorine-based resin including carbon powder (C) occupied in layer B/(volume of layer B} - \text{volume of space occupied in layer B)} \ldots \text{(I)}$$

$$\text{Change in occupation rate: (occupation rate of fluorine-based resin including carbon powder (C) in layer B divided in thickness of 20 } \mu\text{m)} - \text{(occupation rate of fluorine-based resin including carbon powder (C) in adjacent layer B divided in thickness of 20 } \mu\text{m)} \ldots \text{(II)}$$

15. A polymer electrolyte fuel cell using the porous electrode substrate according to any one of claims 11 to 14.

## INTERNATIONAL SEARCH REPORT

| International application No. |
| --- |
| PCT/JP2014/062158 |

A.   CLASSIFICATION OF SUBJECT MATTER
*H01M4/88*(2006.01)i, *H01M4/86*(2006.01)i, *H01M4/96*(2006.01)i, *H01M8/10*
(2006.01)i

According to International Patent Classification (IPC) or to both national classification and IPC

B.   FIELDS SEARCHED

Minimum documentation searched (classification system followed by classification symbols)
H01M4/88, H01M4/86, H01M4/96, H01M8/10

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br><br>A | WO 2004/031465 A1  (Toray Industries, Inc.),<br>15 April 2004 (15.04.2004),<br>page 31, line 18 to page 32, line 12; page 42,<br>lines 11 to 20; page 47, lines 7 to 22; page 48,<br>lines 8 to 15<br>& EP 1548164 A1<br>paragraphs [0110], [0113], [0154] to [0156],<br>[0175] to [0177], [0179] | 1-4,9-12,<br>14-15<br>5-8,13 |
| X<br><br>A | JP 2005-100679 A  (Tomoegawa Paper Co., Ltd.),<br>14 April 2005 (14.04.2005),<br>claim 1; paragraphs [0019], [0029]<br>(Family: none) | 1-4,9-12,<br>14-15<br>5-8,13 |

| ☒   Further documents are listed in the continuation of Box C. | ☐   See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    04 August, 2014 (04.08.14) | Date of mailing of the international search report<br>    12 August, 2014 (12.08.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/062158 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | WO 2011/065349 A1  (Mitsubishi Rayon Co., Ltd.), 03 June 2011 (03.06.2011), claim 1; paragraphs [0067] to [0069], [0082], [0083], [0091] to [0095] & EP 2506352 A1 claim 1; paragraphs [0066] to [0068], [0081], [0082], [0092] to [0096] | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013100109 A
- JP 2013233850 A
- WO 2002042534 A
- WO 2001056103 A
- JP 2007273466 A
- JP 2008503043 W
- JP 2009087614 A